(19) Europäisches Patentamt
European Patent Office
Office européen des brevets

(11) Veröffentlichungsnummer: **0 270 126 B1**

# (12) EUROPÄISCHE PATENTSCHRIFT

(45) Veröffentlichungstag der Patentschrift: **23.03.94**

(51) Int. Cl.$^5$: **C08G 18/08**, C08G 18/10, C08G 18/28, C08G 18/80, B01F 17/00

(21) Anmeldenummer: **87117960.2**

(22) Anmeldetag: **04.12.87**

Die Akte enthält technische Angaben, die nach dem Eingang der Anmeldung eingereicht wurden und die nicht in dieser Patentschrift enthalten sind.

## (54) Als Dispergiermittel und als Dispersionsstabilisatoren geeignete Additionsverbindungen, Verfahren zu ihrer Herstellung, ihre Verwendung und damit beschichtete Feststoffe.

(30) Priorität: **05.12.86 DE 3641581**

(43) Veröffentlichungstag der Anmeldung:
**08.06.88 Patentblatt 88/23**

(45) Bekanntmachung des Hinweises auf die Patenterteilung:
**23.03.94 Patentblatt 94/12**

(84) Benannte Vertragsstaaten:
**AT BE CH DE FR GB IT LI LU NL SE**

(56) Entgegenhaltungen:
**EP-A- 0 154 678**
**EP-A- 0 194 349**
**US-A- 3 684 771**
**US-A- 4 155 892**
**US-A- 4 163 749**

(73) Patentinhaber: **Byk-Chemie GmbH**
**Postfach 10 02 45**
**D-46463 Wesel(DE)**

(72) Erfinder: **Haubennestel, Karlheinz**
**Hermann-Hesse-Strasse 30**
**D-4230 Wesel(DE)**
Erfinder: **Pritschins, Wolfgang, Dr.**
**Kleiststrasse 4**
**D-4230 Wesel(DE)**

(74) Vertreter: **Türk, Gille, Hrabal, Leifert**
**Brucknerstrasse 20**
**D-40593 Düsseldorf (DE)**

EP 0 270 126 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft als Dispergiermittel und als Dispersionsstabilisatoren geeignete Additionsverbindungen oder deren Salze, erhältlich durch Umsetzung von Polyisocyanaten, Hydroxyverbindungen und Zerewitinoff-Wasserstoff sowie mindestens eine saure funktionelle Gruppierung, Hydroxy- oder Alkoxysilyl-Gruppe enthaltenden Verbindungen gegebenenfalls in Anwesenheit von Lösungsmitteln und gegebenenfalls in Gegenwart von Umsetzungskatalysatoren.

Die Erfindung betrifft weiterhin Verfahren zur Herstellung dieser Additionsverbindungen, deren Verwendung als Dispergiermittel und Dispersionsstabilisatoren und in flüssige Systeme einzuarbeitende pulver- oder faserförmige Feststoffe, die mit solchen Dispergiermitteln beschichtet sind.

Um Feststoffe in flüssige Medien einzubringen, sind hohe mechanische Kräfte notwendig. Um diese Dispergierkräfte zu reduzieren, ist es üblich, Dispergiermittel anzuwenden, welche die Einarbeitung erleichtern. Hierbei handelt es sich im allgemeinen um oberflächenaktive Stoffe, auch Tenside genannt, von anionen- oder kationenaktiver sowie nichtionogener Struktur. Diese Stoffe werden in geringen Zusatzmengen, entweder auf den Feststoff direkt aufgebracht oder dem Dispergiermedium zugesetzt. Durch ein solches Tensid wird der Dispergieraufwand wesentlich reduziert.

Bekannt ist weiterhin, daß diese Feststoffe aufgrund gegenseitiger Anziehungskräfte nach dem Dispergierprozeß wieder zum Reagglomerieren neigen, was den zuvor aufgewendeten Dispergieraufwand zunichte nacht und zu gravierenden Problemen führt.

Eine unzulängliche Dispergierung macht sich bemerkbar durch Viskositätsanstieg in flüssigen Systemen, Glanzverluste und Farbtonverschiebungen in Locken und Beschichtungen, ungenügende Farbkraftentwicklung in pigmentierten Kunststoffen, sowie Verringerung der mechanischen Festigkeit in verstärkten Kunstoffen.

Zur Lösung dieser Aufgabe sind Dispergiermittel z.B. in den US-A-3 788 996, US-A-3 817 944, US-A-4 029 861, US-A-4 032 698, US-A-4 048 207, US-A-4 070 388, DE-A-2 125 064, EP-A-0 018 099, EP-A-0 127 325, FR-A-2 241 597, GB-A-1 339 930, GB-A-1 393 401 und GB-A-1 393 402 vorgeschlagen. Diese Dispergiermittel führen jedoch nur zu Teillösungen, insbesondere im Hinblick auf die flockulationsfreie Mischbarkeit von verschiedenen Pigmenten untereinander, wie organische Pigmente und anorganische Pigmente. Auch neigen die nach den beschriebenen Verfahren hergestellten Pigmentpasten z.B. nach Einsatz in Locken zu Wechselwirkungen mit dem umgebenden Medium. Es kann damit angenommen werden, daß die aufgebauten Adsorptionsschichten keine genügende Stabilität gegen Desorption aufweisen.

Aus der EP-A-0 194 349 sind aus polymeren Diphenylmethan-4,4'-diisocyanaten, Aminen, einwertigen und zweiwertigen Polymeren erhältliche Additionsverbindungen bekannt, welche sich als Dispergatoren für Feststoffe in organischen Medien eignen.

Nach dem neuesten Stand der Technik wird in der EP-A-0 154 678 beschrieben, daß die aufgeführten Nachteile weitgehend behoben werden können durch Einsatz der dort vorgeschlagenen Additionsverbindungen. Mit diesen Additionsverbindungen können zum Teil bereits ausgezeichnete Ergebnisse erzielt werden. Jedoch läßt sich damit nicht generell bei allen zu dispergierenden Feststoffen und Bindemitteln ein positiver Effekt erzielen. In einer ganzen Reihe von Fällen reichen die erzielten Ergebnisse nicht aus, um eine über einen längeren Zeitraum stabile Adsorptionsschicht aufzubauen und damit eine ausreichende Stabilität zu gewährleisten.

Außerdem enthalten die der EP-A-0 154 678 gemäßen Additionsverbindungen in jedem Fall basische Stickstoffatome. Wie dem Fachmann bekannt ist, können solche basischen Gruppen nachteilig sein in bestimmten Anwendungsgebieten, in denen solche Gruppierungen zu Wechselwirkungen mit dem umgebenden Medium führen, wie zum Beispiel Verringerung der Lagerstabilität von 2-Komponenten-Polyurethansystemen durch reaktionsbeschleunigende Wirkung oder Verstärkung des Polymerabbaus von Polyvinylchlorid bei thermischer Belastung.

Der vorliegenden Erfindung liegt die Aufgabe zugrunde, Dispergiermittel und Dispersionsstabilisatoren ohne basische Gruppierungen zu finden, die die obigen Nachteile nicht oder in wesentlich geringerem Umfange aufweisen, und die insbesondere zu Dispersionen von Feststoffen führen, die nach dem Dispergierprozeß nicht oder nur in untergeordnetem Ausmaß zum Reagglomerieren neigen und demzufolge eine bessere Stabilität aufweisen.

Es wurde nun überraschenderweise gefunden, daß diese Aufgabenstellung mit den nachfolgend definierten Additionsprodukten gelöst werden kann. Gegenstand der Erfindung sind demgemäß als Dispergiermittel und als Dispersionsstabilisatoren geeignete Additionsverbindungen und deren Salze, erhältlich durch Umsetzung von Polyisocyanaten, Hydroxyverbindungen und weiteren Zerewitinoff-Wasserstoff sowie mindestens eine saure funktionelle Gruppierung oder Alkoxysilyl-Gruppe enthaltenden Verbindungen, gegebenenfalls in Anwesenheit von Lösungsmitteln und gegebenenfalls in Gegenwart von Umsetzungskatalysatoren,

**dadurch gekennzeichnet**,

daß sie dadurch erhältlich sind, daß Polyisocyanate mit einer mittleren Funktionalität von 2,5 bis 10

a) mit Monohydoxyverbindungen der Fomel I

Y-OH    I

wobei Y die folgenden Bedeutungen hat:

i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,

ii) mindestens eine -O-, -NHCOO- und/oder -COO-Gruppe enthaltende aliphatische, cycloaliphatische und/oder aromatische Gruppe mit mittleren Molekulargewichten $\overline{M}_n$ von 200 bis 10000, wobei die Wasserstoffatome teilweise durch Halogene ersetzt sein können,

in einer solchen Menge umgesetzt werden, daß 10 bis 70 % der NCO-Gruppen umgesetzt sind,

b) mit Verbindungen der Formel

G-(E)n    II

wobei G-(E)n Diole, Triole, Diamine, Dihydroxydialkylsulfide oder Dihydroxysulfone darstellt, n für 2 oder 3 steht, und G eine mindestens 2 Kohlenstoffatome enthaltende aliphatische, cycloatliphatische und/oder aromatische Gruppe mit mittlerem Molekulargewicht $\overline{M}_n$ von höchstens 3000 darstellt, die -O-, -COO-, CONH-, -NHCOO-, -S-, $-Si(CH_3)_2O-$ und/oder $-SO_2$-Gruppen enthalten kann, in einer solchen Menge umgesetzt wird, daß 1 bis 50 % der NCO-Gruppen der ursprünglich eingesetzten Polyisocyanate umgesetzt sind, wobei jedoch durch die Umsetzungen a) und b) insgesamt mindestens 20 % und maximal 85 % der NCO-Gruppen der ursprünglich eingesetzten Polyisocyanate umgesetzt sind,

c) mit mindestens einer der Verbindungen der allgemeinen

Formel III    Z-Q    III

oder

IV    Z-NH-Z    IV

worin Q für -OH, $-NH_2$, -NHR (worin R für eine Alkylgruppe mit 1 bis 4 Kohlenstoffatomen steht) oder -SH steht und jedes Z, die gleich oder verchieden sind, einen aliphatischen und/oder cycloaliphatischen und/oder aromatischen Rest mit mindestens einer sauren funktionellen Gruppierung und/oder mit mindestens einer $Si(OR)_m(R')_{3-m}$-Gruppe (worin R und R' Alkylgruppen mit 1 bis 10 Kohlenstoffatomen darstellen und $m = 1\text{-}3$) darstellt oder Z-Q Mono- oder Polyhydroxyverbindungen darstellt, die eine primäre Aminogruppe enthalten, in einer solchen Menge umgesetzt wird, daß auf jede verbleibende in den Reaktionen a) und b) noch nicht umgesetzte Isocyanatgruppe mindestens 0.8 Moleküle der Verbindung Z-Q und/oder Z-NH-Z entfallen, und

d) wenn das erhaltene Reaktionsprodukt nicht umgesetzte Hydroxyl-Gruppen enthält, diese Hydroxyl-Gruppen mit Polycarbonsäuren mit mindestens 2 Carboxylgruppen oder deren Anhydriden in einer solchen Menge umgesetzt werden, daß auf jede umzusetzende OH-Gruppe mindestens 0,8 Moleküle Polycarbonsäure oder Polycarbonsäureanhydrid eingesetzt wird.

Vorteilhaft sind bei der Umsetzung a) 15 bis 45 %, besonders bevorzugt 20 bis 40 % der NCO-Gruppen umgesetzt und/oder bei der Umsetzung b) 5 bis 45 %, besonders bevorzugt 15 bis 40 % der NCO-Gruppen der ursprünglich eingesetzten Polyisocyanate umgesetzt und/oder durch die Umsetzungen a) und b) insgesamt 30 bis 65 %, besonders bevorzugt 40 bis 60 % der NCO-Gruppen der ursprünglich eingesetzten Polyisocyanate umgesetzt und/oder bei der Umsetzung d) auf jede umzusetzende OH-Gruppe ein Molekül Polycarbonsäure oder Polycarbonsäureanhydrid eingesetzt.

Zur Herstellung der erfindungsgemäßen Additionsverbindungen können auch Gemische von verschiedenen Verbindungen nach Formel I, II, III und/oder IV eingesetzt werden.

Die Umsetzung der Polyisocyanate mit den Verbindungen der Formeln I bis IV kann in einem einzigen Reaktionsschritt oder in mehreren Reaktionsschritten nacheinander durchgeführt werden. Das kann in beliebiger Reihenfolge geschehen, wobei auch zwei Reaktionsschritte zusammengefaßt werden können. Z. B. kann nach vollständiger oder teilweiser Umsetzung der Polyisocyanate mit der entsprechenden Menge Verbindung der Formel I die weitere Umsetzung durch Zugabe einer Mischung aus den Verbindungen der

Formel II, III und/oder IV eingeleitet werden. In vielen Fällen ist es allerdings zweckmäßig, das Polyisocyanat in drei Einzelschritten nacheinander mit den Komponenten in der Reihenfolge I, II, III und/oder IV umzusetzen. Insbesondere bei Verbindungen nach Formel III oder IV, die neben Q noch weitere NCO-reaktive Gruppen enthalten, ist es sinnvoll, diese Reihenfolge einzuhalten, um unerwünschte Effekte wie die Bildung schwer löslicher Reaktionsprodukte oder die Verzögerung von Isocyanatreaktionen durch saure Gruppierungen zu vermeiden.

Gegenstand der Erfindung ist weiterhin das Verfahren zur Herstellung der Additionsverbindungen, wie es vorstehend beschrieben wurde.

Weiterhin ist Gegenstand der Erfindung die Verwendung der vorstehend beschriebenen Additionsverbindungen als Dispergiermittel und als Dispersionsstabilisatoren. Gegenstand der Erfindung sind weiterhin in flüssige Systeme einzuarbeitende pulver- oder faserförmige Feststoffe, die mit diesen Additionsverbindungen als Dispergiermittel und als Dispersionsstabilisatoren beschichtet sind. Pulver- oder faserförmige Feststoffe sind solche, wie sie gemäß dem Stand der Technik mit Dispergiermitteln beschichtet wurden, insbesondere organische und anorganische Pigmente, die in Anstrichmitteln, Überzugsmitteln, Formmassen oder sonstigen Kunststoffen eingesetzt werden, anorganische oder organische Füllstoffe, die zum Füllen oder Verstärken von Anstrichmitteln, Überzugsmitteln, Formmassen oder sonstigen Kunststoffen eingesetzt werden. Eine Untergruppe von derartigen Füllstoffen sind Fasern organischer und/oder anorganischer Natur, die ebenfalls als Füllstoffe oder Verstärkungsstoffe verwendet werden.

Beispiele für Pigmente sind Mono-, Di-, Tri- und Polyazopigmente, Oxazin-, Dioxazin,- Thiazin-Pigmente, Phthalocyanine und andere Metallkomplex-Pigmente, Indigoide Pigmente, Diphenylmethan-, Triarylmethan, Xanthen-, Acridin-, Chinacridon-, Methin-Pigmente, Anthrachinon, Pyranthron-, Perylen- und andere polycyclische Carbonyl-Pigmente, anorganische Pigmente auf Basis von Ruß Graphit, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden von Nickel, Titan, Zink, Mangan, Cobalt, Eisen, Chrom, Antimon, Magnesium, Aluminium (beispielsweise Nickeltitangelb oder Chromtitangelb), magnetischen Eisenoxiden und Chromoxiden, Metalleffektpigmente wie Aluminiumbronzen, Perlglanzpigmente, fluoreszierende und phosphoreszierende Leuchtpigmente.

Beispiele für pulver- oder faserförmige Füllstoffe sind solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas, Kohlenstoff.

Derartige pulver- oder faserförmige Feststoffe mit einer Beschichtung von Dispergiermitteln und Dispersionsstabilisatoren gemäß der Erfindung werden in an sich bekannter Weise hergestellt, wobei anstelle der nach dem Stand der Technik bekannten Dispergiermittel diejenigen gemäß der Erfindung eingesetzt werden. Auf dem Gebiet der Faserstoffe nennt man diese Dispergiermittel häufig auch Schlichten. Dazu können die Feststoffe, z. B. in einem Wirbelbett mit einer Lösung oder Emulsion der Additionsverbindungen gemäß der Erfindung beschichtet werden. Das Lösungs- oder Emulsionsmittel kann dann entfernt werden, es kann aber auch im Gemisch verbleiben, so daß Pasten erhalten werden. Eine andere Möglichkeit besteht z. B. darin, daß die zu beschichtenden Feststoffe in einem flüssigen Medium angeschlämmt und dieser Anschlämmung die Additionsverbindungen gemäß der Erfindung zugesetzt werden

Auch hier kann das Anschlämmen in der Weise erfolgen, daß eine verarbeitbare Paste erhalten wird, wobei naturgemäß das flüssige Medium zum Anschlämmen angepaßt ist dem späteren Verwendungszweck dieser Paste, z. B. der Pigmentpaste

Es gibt mehrere Möglichkeiten, die erfindungsgemäßen Additionsverbindungen auf die Feststoffoberfläche von Pigmenten aufzubringen. Dieser Vorgang kann während oder nach der Synthese von Pigmenten durch Zusatz der Additionsverbindungen zur wässrigen Pigmentsuspension, zur Pigmentsuspension in Wasser-Lösungsmittelgemischen oder zur Pigmentsuspension in Lösungsmitteln - gegebenenfalls vor, während oder nach einem Pigmentfinish - oder bei ihrer Weiterverarbeitung im Anwendungsmedium erfolgen.

Der Zusatz der Additionsverbindung zur wässrigen Pigmentsuspension kann in solchen Lösungsmitteln erfolgen, die mit Wasser mindestens teilweise mischbar sind, z. B. aliphatische Alkohole mit 1-6 Kohlenstoffatomen wie Ethanol; Glykole, Glykolether und Glykolester wie Propylenglykol, Ethylglykolacetat, Methoxypropylacetat; Ketone wie Aceton, Methylethylketon; Carbonsäureamide wie Dimethylformamid, N-Methylpyrolidon.

In Verbindung mit einer thermischen Nachbehandlung eines Pigmentes - etwa zur Erhöhung seiner Deckkraft oder zur Verbesserung anderer anwendungstechnischer Eigenschaften - erfolgt die Zugabe der Additionsverbindung zweckmäßig in dem Lösungsmittel, in dem die thermische Nachbehandlung durchgeführt wird.

Die Zugabe der Additionsverbindung bzw. ihrer Lösung kann vor, während oder nach einem Finish erfolgen. Das Lösungsmittel läßt sich anschließend, etwa durch Wasserdampf, rasch und quantitativ abtreiben und die Additionsverbindung besonders einfach und mit hohem Wirkungsgrad auf die Pigmentoberfläche aufbringen. Das so präparierte Pigment kann anschließend aus der zurückbleibenden wässrigen Suspension isoliert werden.

Das Aufbringen der Additionsverbindung kann auch ohne vorausgegangene oder nachfolgende thermische Behandlung (Finish) des Pigmentes erfolgen, indem unmittelbar nach Zugabe der Additivlösung zur wässrigen Pigmentsuspension unter intensivem Rühren das verwendete Lösungsmittel etwa mit Wasserdampf wieder abdestilliert wird.

Im einfachsten Fall läßt sich die gelöste Additionsverbindung in ihrer Herstellungsform ohne vorherige Isolierung zur Beschichtung der Pigmentoberfläche einsetzen. Liegt die Additionsverbindung - bedingt durch die Synthese - in einem Lösungsmittel vor, das bei der Applizierung zur Pigmentsuspendion zu unerwünschten coloristischen Veränderungen des Pigmentes oder zu technischen Schwierigkeiten führt, ist es vorteilhaft, die Additionsverbindung in eine anwendbare, für das jeweilige Pigment geeignete Form zu überführen, d.h., das Lösungsmittel ganz oder teilweise zu entfernen und gegebenenfalls durch geeignetere Lösungsmittel zu ersetzen.

Wenn die Additionsverbindung sauren Charakter hat, kann es von Vorteil sein, mit basischen Verbindungen wie Aminen oder Aminalkoholen zu neutralisieren bzw. die Pigmentsuspension schwach alkalisch zu stellen.

Gegenüber den unbehandelten Vergleichspigmenten zeichnen sich die erfindungsgemäß präparierten Pigmente im Lack durch hervorragende rheologische Eigenschaften sowie durch deutlich verbessertes Glanz- Viskositäts- und Flockulationsverhalten, häufig auch durch höhere Farbstärke aus.

Die Verwendung der Additionsverbindungen gemäß der Erfindung als Dispergiermittel und als Dispersionsstabilisatoren kann aber auch - wie gemäß dem Stand der Technik für bekannte Dispergiermittel - so erfolgen, daß die Additionsverbindungen irgendwelchen Systemen z. B. Lacken, Kunststoffmischungen und dergleichen zugesetzt werden, die die einzuarbeitenden Feststoffe wie Pigmente, Füllstoffe, Fasern, bereits dispergiert enthalten.

Für die Herstellung der Additionsverbindungen gemäß der Erfindung werden als Polyisocyanate die auf diesem technischen Gebiet nach dem Stand der Technik brauchbaren Verbindungen eingesetzt. Sie müssen jedoch eine mittlere Funktionalität von 2,5 bis 10 haben. Beispiele für solche Polyisocyanate sind solche, die z. B. durch Addition von Diisocyanaten an Polyole erhalten werden können wie

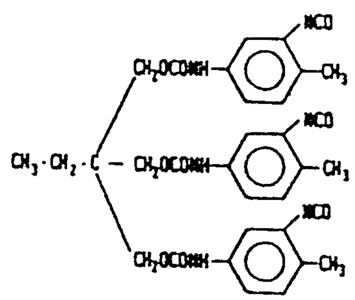

(1)

Handelsprodukt: Desmodur L (eingetragenes Warenzeichen) oder die durch Biuretreaktion aus Diisocyanaten erhalten werden können wie:

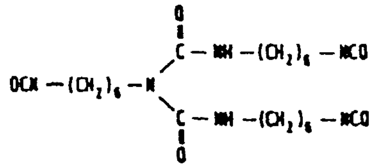

(2)

Handelsprodukt: Desmodur N (eingetragenes Warenzeichen) oder aber die durch Cyclisierung von Diisocyanaten erhältlichen Polyisocyanate mit Isocyanurat Grundstruktur

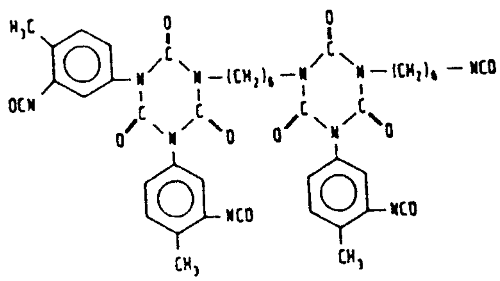

(3)

Handelsprodukt: Desmodur HL (eingetragenes Warenzeichen)

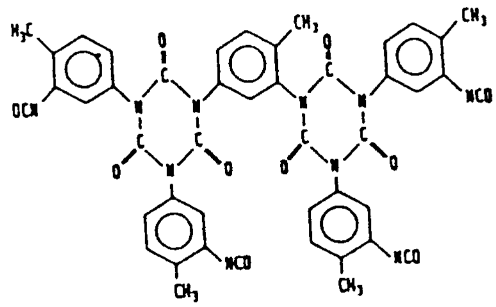

(4)

Handelsprodukt: Desmodur IL (eingetragenes Warenzeichen)

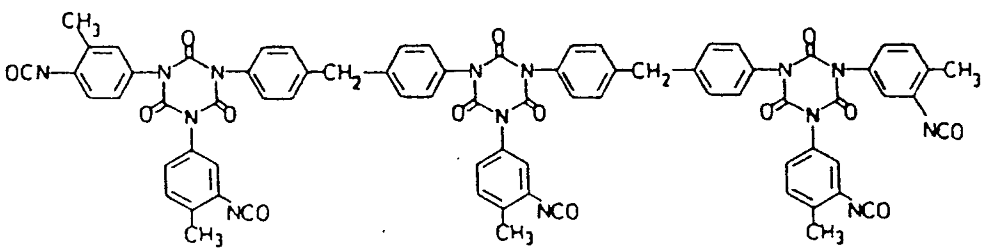

(5)

Handelsprodukt: Polurene KC (eingetragenes Warenzeichen)

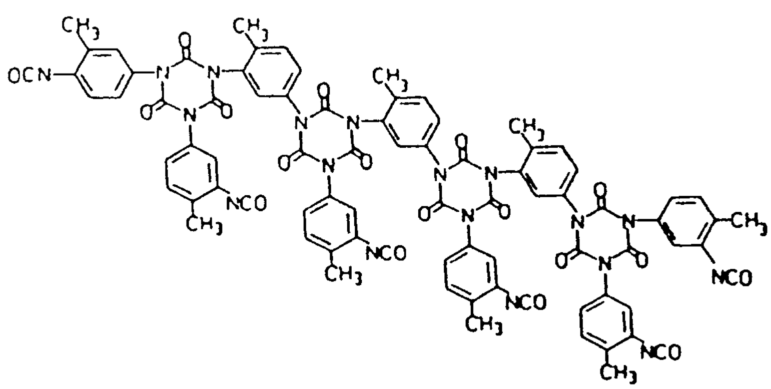

(6)

Handelsprodukt: Polurene HR (eingetragenes Warenzeichen)

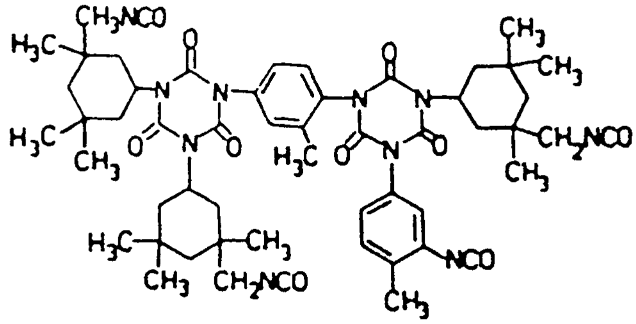

(7)

Toluylendiisocyanat-isophorondiisocyanat-isocyanurat (Firma SAPICI)

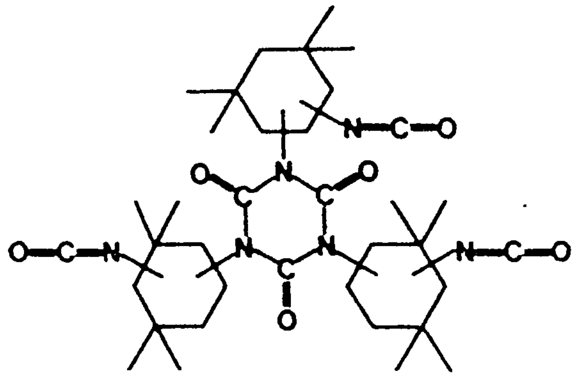

(8)

Trimeres Isophorondiisocyanat (Isocyanurat T1890 der Firma Chemische Werke Hüls)

Weitere Beispiele für als Handelsprodukte erhältliche Polyisocyanate sind Desmodur VL (Polyisocyanat auf Basis Diphenylmethandiisocyanat (MDI) der Firma Bayer), Desmodur Z 4370 (Polyisocyanat auf Basis Isophorondiisocyanat (IPDI) der Firma Bayer), Polurene KD (Polyisocyanurat auf Basis Toluylendiisocyanat (TDI) der Firma SAPICI), Uronal RA.50 (Polyisocyanurat auf Basis TDI der Firma Galstaff), Polurene A (Polyisocyanat auf Basis TDI-Trimethylolpropan (TMP) der Firma SAPICI), Polurene MC (Polyisocyanat auf Basis TMP-IPDI der Firma SAPICI), Polurene MD.70 (Polyisocyanat auf Basis TMP-TDI-MDI der Firma SAPICI).

Diese Verbindungen stellen Handelsprodukte dar, die häufig nicht in reiner Form vorliegen, sondern die Gemische von gewissen Verbindungen ähnlicher Struktur darstellen. Unter mittlerer Funktionalität wird verstanden, daß die Handelsprodukte hinsichtlich der Isocyanatgruppen die angegebene Funktionalität von 2,5 bis 10, vorzugsweise 3 bis 6, aufweisen. Beispielsweise bedeutet "Funktionalität von 3", daß ein Molekül im statistischen Mittel 3 freie Isocyanatgruppen enthält. Die mittlere Funktionalität kann man experimentell dadurch ermitteln, daß man das mittlere Molekulargewicht $M_n$ bestimmt. Außerdem bestimmt man die NCO-Zahl und errechnet daraus das NCO-Äquivalentgewicht. Die mittlere Funktionalität ist der Quotient aus dem mittleren Molekulargewicht und dem NCO-Äquivalentgewicht.

Als Monohydroxyverbindungen der Formel I können aliphatische, cycloaliphatische und/oder araliphatische Verbindungen eingesetzt werden mit jeweils 8 bis 30 Kohlenstoffatomen. Es können auch Gemische solcher Verbindungen eingesetzt werden.

Vorteilhaft werden solche Verbindungen der Formel I eingesetzt, bei denen Y die folgende Bedeutung hat:

Mindestens eine -O- und/oder -COO- Gruppe enthaltende aliphatische, cykloaliphatische und/oder aromatische Gruppen mit mittleren Molekulargewichten $\overline{M}_n$ von 200 bis 10000, wobei die Wasserstoffatome teilweise durch Halogene ersetzt sein können.

Es können geradkettige und verzweigte aliphatische oder araliphatische Verbindungen eingesetzt werden. Sie können gesättigt oder ungesättigt sein. Gesättigte Verbindungen sind bevorzugt. Die Wasserstoffatome können teilweise durch Halogene, vorzugsweise durch Fluor und/oder auch Chlor ersetzt sein. Wenn derartig substituierte Verbindungen eingesetzt werden, handelt es sich vorzugsweise um aliphatische

Monoalkohole. Derartige Produkte sind im Handel erhältlich, wobei wie dem Fachmann bekannt, die der Hydroxylgruppe nahestehenden Kohlestoffatome in der Regel keine Halogenatome aufweisen. Beispiele für spezielle fluorierte Alkohole sind Heptadecafluorodecanol oder $C_6F_{13}CH_2CH_2OH$. Die im Handel erhältlichen entsprechenden Produkte sind häufig nicht einheitlich, sondern Gemische von verschiedenen fluorierten Verbindungen, wie sie bei der technischen Synthese erhalten werden.

Als Monohydroxyverbindungen der Formel I können auch solche eingesetzt werden, die mindestens eine -O-, -NHCOO-, und/oder -COO-Gruppe enthalten. Es handelt sich also um Polyether, Polyester, Polyurethane, Polyacrylsäureester, Polymethacrylsäureester, gemischte Polyether-Polyester, Polyether- Polyurethane, Polyester-Polyurethane oder Polyether-Polyester-Polyurethane. Beispiele für Polyester sind solche, die durch Polymerisation eines Lactons, wie Propiolacton, Valerolacton, Caprolacton oder deren substituierte Derivate mittels einer Monohydroxy-Startkomponente erhalten werden können. Als Startkomponente werden Monoalkohole, zweckmäßig mit 4 bis 30, vorzugsweise 4 bis 14 C-Atomen, wie n-Butanol, längerkettige, gesättigte und ungesättigte Alkohole wie Propargylalkohol, Oleylalkohol, Linolylalkohol, Oxoalkohole, Cyclohexanol, Phenylethanol, Neopentylalkohol, aber auch fluorierte Alkohole, wie sie oben erwähnt sind, eingesetzt. Es können auch Alkohole der zuvor beschriebenen Art und substituierte und unsubstituierte Phenole durch Alkoxilierung nach bekannten Verfahren mit Ethylenoxid und/oder Propylenoxid in Polyoxyalkylenmonoalkyl-, aryl-, aralkyl- und cycloalkylether überführt werden und diese Monohydroxypolyether in der vorbeschriebenen Art als Startkomponente für die Lactonpolymerisation eingesetzt werden. Jeweils können auch Gemische von vorgenannten Verbindungen eingesetzt werden.

Diese Lactonpolymerisation wird nach bekannten Verfahren, initiert durch z. B. p-Toluolsulfonsäure oder Dibutylzinndilaurat, bei Temperaturen von etwa 100° C bis 180° C durchgeführt und läuft nach folgendem beispielhaften Reaktionsweg ab.

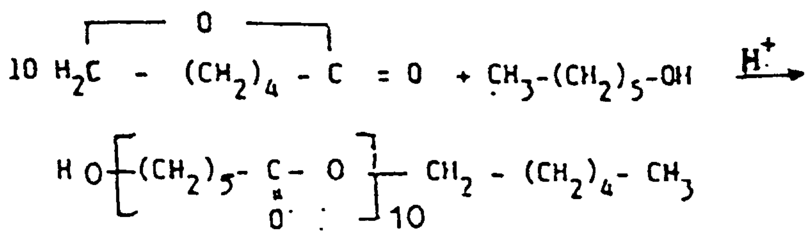


Diese Polyester haben zweckmäßig ein Molekulargewicht im Bereich von etwa 350 bis 10000, vorzugsweise 500 bis 5000, wobei durch Lactonpolymerisation in der oben beschriebenen Art erhaltene Verbindungen bevorzugt sind. Als Starteralkohole werden gesättigte Monoalkohole mit 4 bis 18 C-Atomen bevorzugt.

Andere Beispiele für Polyester sind solche, die durch Kondensation eines Glykols und einer dibasischen Säure in Anwesenheit von Monohydroxyverbindungen erhalten werden können. Die Bildung von Dihydroxypolyestern kann durch Einsatz entsprechend stöchiometrischer Mengen an Monohydroxyverbindungen, wie sie oben beschrieben wurden, zurückgedrängt werden.
Die Reaktion läuft nach folgendem beispielhaften Reaktionsweg ab:

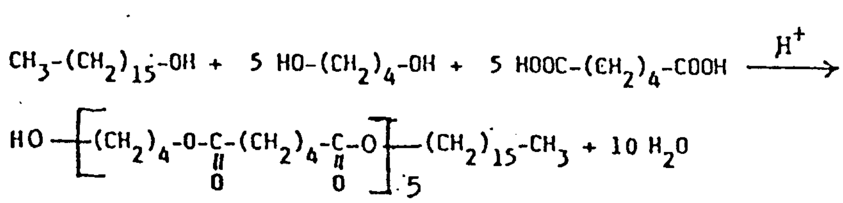


Zweckmäßig haben diese Polyester ein mittleres Molekulargewicht von 400 bis 2500, vorzugsweise von 800 bis 1500.

Ein weiteres Beispiel sind Polyester, die erhältlich sind, durch Kondensation einer Hydroxycarbonsäure in Anwesenheit von Monohydroxyverbindungen, wie sie oben beschrieben wurden, zur Kontrolle des Molekulargewichtes.
Die Reaktion läuft nach folgendem beispielhaften Reaktionsweg ab:

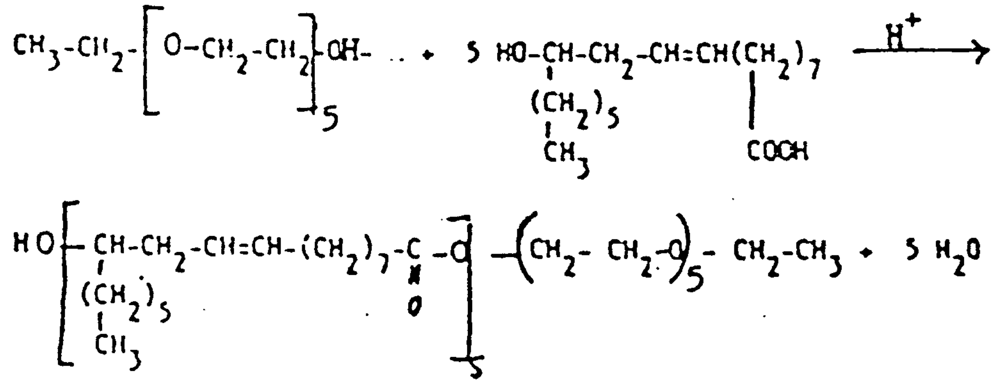

In diesem Fall beträgt das mittlere Molekulargewicht der Polyester zweckmäßig 600 bis 3000, vorzugsweise 800 bis 1500.

Als Verbindungen der Formel I können auch Polyoxyalkylenglykolmonoalkylether mit mittleren Molekulargewichten $\overline{M}_n$ von 200 bis 3000 eingesetzt werden.

Als Verbindung der Formel I, wobei Y die Bedeutung von ii) hat, können auch monohydroxyfunktionelle Polyacrylsäureester und/oder Polymethacrylsäureester eingesetzt werden, wie sie durch Polymerisation von Acrylsäureestern bzw. Methacrylsäureestern unter Zugabe eines monohydroxyfunktionellen Polymerisationsreglers erhalten werden. Solche Verbindungen sind auf diesem Gebiet der Technik bereits zur Herstellung von anderen Dispergiermitteln verwendet worden, wie sie z. B. in der US-A-4 032 698 beschrieben sind. Die Herstellung dieser Verbindungen durch radikalische Polymerisation läuft nach folgendem beispielhaften Reaktionsweg ab:

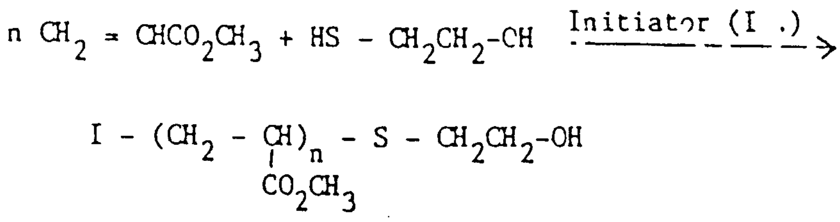


Diese Polyacrylate haben zweckmäßig ein mittleres Molekulargewicht $M_n$ von 300 bis 10000, vorzugsweise 500 bis 5000.

Wie dem Fachmann bekannt, erfolgt dabei die Steuerung des gewünschten mittleren Molekulargewichtes über die Regler- und Initiatorkonzentration und die Reaktionstemperatur: Je höher die Temperatur, die Regler- und die Initiatorkonzentration, desto niedriger ist das erhaltene mittlere Molekulargewicht.

Zur Steuerung der Reaktion können die nach dem Stand der Technik üblichen Regler (z. B. 2-Mercaptoethanol, 2-Mercaptopropanol) und Initiatoren (z.B. Dibenzoylperoxid, Azobisisobutyronitril usw.) verwendet werden.

Zweckmäßig führt man die Polymerisation zur besseren Wärmeregulierung diskontinuierlich unter Rückfluß in einem geeigneten inerten Lösungsmittel bei Temperaturen von etwa 50 - 120° C durch. Bei höherem Monomerengehalt legt man häufig den größten Teil des Lösungsmittels und nur eine kleine Menge der Reaktanden vor und gibt den Rest der Reaktionslösung entsprechend dem Reaktionsverlauf zu.

Die Carboxylgruppe der monomeren Acrylate bzw. Methacrylate kann verestert sein mit aliphatischen, cycloaliphatischen und/oder aromatischen Alkoholen wie Methanol, Butanol, Cyclohexanol, 2-Ethylhexanol, Lauryl-, Stearyl-, Isobornyl-, Benzylalkohol oder mit Etheralkoholen wie 2-Methoxyethanol, 2-Phenoxyethanol, Tetrahydrofurfurylalkohol, Glycidol oder mit Polyesteralkoholen wie hydroxyfunktionellem Polycaprolacton, oder mit Alkoxypolyalkylenglykolen wie Methoxypolyethylenglykol, Methoxypolypropylenglykol. Das mittlere Molekulargewicht $M_n$ der Veresterungskomponente liegt dabei zweckmäßig unter 2000.

Zur Herstellung der hydroxyfunktionellen Polyacrylate bzw. Polymethacrylate können auch Mischungen von verschiedenen der vorstehend beschriebenen Monomere eingesetzt werden.

Zur Herstellung dieser Polyacrylate bzw. Polymethacrylate können als Comonomere auch Vinylester wie

Vinylacetat, Vinylether wie Vinylethylether, Styrol, Vinyltoluol und/oder Vinylcyclohexan verwendet werden. Die so erhaltenen Copolymere enthalten dabei zweckmäßig nicht mehr als 50 Mol % an nicht acrylfunktionellen Comonomeren.

Als Monohydroxyverbindungen der Formel I können auch Polyurethane, Polyether-Polyurethane, Polyester-Polyurethane und/oder Polyether-Polyester-Polyurethane eingesetzt werden, die durch Additionsreaktion eines Diisocyanates mit einer Dihydroxyverbindung in Anwesenheit einer Monohydroxyverbindung erhalten werden können. Die Reaktion läuft nach folgendem beispielhaftem Reaktionsweg ab:

$$CH_3(CH_2)_7\text{-}OH + 5\ OCN - (CH_2)_6 - NCO + 5\ HO\text{-}(CH_2)_4 - OH \longrightarrow$$

$$CH_3(CH_2)_7 - \left[OOCNH - (CH_2)_6 - NHCOO - (CH_2)_4\right]_5 - OH$$

In diesem Fall beträgt das mittlere Molekulargewicht $\overline{M}_n$ der Polyadditionsverbindungen zweckmäßig 300 bis 6000, vorzugsweise 500 bis 3000.

Bei dieser Polyaddition entstehen im allgemeinen Gemische von mono- und difunktionellen Verbindungen mit nichtfunktionellen Verbindungen. Die Bildung von difunktionellen Verbindungen kann durch den Einsatz entsprechend stöchiometrischer Mengen an Monohydroxyverbindungen zurückgedrängt werden. Weiterhin läßt sich durch selektive Reaktionsführung, das heißt niedrige Reaktionstemperatur und schrittweise Reaktionsführung, die Bildung nicht monofunktioneller Nebenprodukte zurückdrängen. Dies gilt insbesondere bei Einsatz von Ausgangsmaterialien mit funktionellen Gruppen unterschiedlicher Reaktivität wie Isophorondiisocyanat, 2,4-Toluylendiisocyanat, 1,2-Butandiol.

Die im Gemisch mit den Monohydroxyverbindungen entstehenden Nebenprodukte stören im allgemeinen bei der weiteren Reaktion nicht. Daher können die so erhaltenen Umsetzungsprodukte ohne weiteres zur Reaktion mit den Polyisocyanaten eingesetzt werden.

Als Diisocyanat können die aus der Polyurethanchemie an sich bekannten aliphatischen, cycloaliphatischen und/oder aromatischen Diisocyanate mit 4 bis 15 Kohlenstoffatomen eingesetzt werden, wie Tetramethylen-Hexamethylen-,Trimethylhexamethylen-, Dodekamethylen-, Isophoron-Toluylen-, Diphenylmethandiisocyanat, Methylenbis(-4-cyclohexylisocyanat) oder 1,4-Cyclohexanbis(methylisocyanat).

Als Dihydroxyverbindungen zum Aufbau der urethangruppenhaltigen Verbindungen nach Formel I werden zweckmäßig Diole mit 2 bis 12 C-Atomen, Polyoxyalkylenglykole und dihydroxyfunktionelle Polyester mit bevorzugten Molekulargewichten von höchstens 2000 eingesetzt, wie sie auch als Verbindungen nach Formel II beschrieben sind.

Als Startkomponente können Monoalkohole mit bis zu 30 C-Atomen, wie sie bereits zur Herstellung der Polyester nach Formel I beschrieben sind, aber auch die als Verbindung nach Formel I beschriebenen Monohydroxypolyester und Monohydroxypolyether eingesetzt werden.

Die Polyester haben zweckmäßig ein Molekulargewicht von 300 bis 5000 und die Polyether von 200 bis 2000.

Durch die Umsetzung der Polyisocyanate mit den Verbindungen der Formel I wird ein Teil der freien Isocyanatgruppen mit den Hydroxygruppen der Verbindungen der Formel I zur Umsetzung gebracht. Zweckmäßig werden im Mittel auf je 1 Molekül Polyisocyanat mindestens 0,7, vorzugsweise etwa 1 Molekül der Formel I umgesetzt, so daß an jedes Polyisocyanat-Molekül etwa eine Verbindung der Formel I gebunden ist. Wenn Polyisocyanate mit einer mittleren Funktionalität von mehr als 3 eingesetzt werden, kann auch eine größere Menge an Verbindungen der Formel I eingesetzt werden. In der Regel sollten von jedem Molekül Polyisocyanat mindestens 2, bei Polyisocyanaten mit einer mittleren Funktionalität von weniger als 4 etwa 2 Isocyanatgruppen nicht umgesetzt bleiben, von denen im einfachsten Fall durch die weiteren Umsetzungen jeweils etwa eine Isocyanatgruppe zur Vernetzung mit Verbindungen der Formel II dient und etwa eine Isocyanatgruppe mit Verbindungen der Formel III oder IV umgesetzt wird. Je nach Funktionalität der eingesetzten Polyisocyanate und der Verbindungen der Formel II können unter sinngemäßer Anwendung dieser Darlegungen die einzelnen Mengenverhältnisse ausgewählt werden. Für bestimmte Anwendungen kann es aber im Einzelfall sinnvoll sein, von den vorstehend genannten Umsetzungsverhältnissen abzuweichen.

Das so erhaltene Reaktionsprodukt wird dann mit Verbindungen der Formel II umgesetzt. Diese Umsetzung kann im gleichen Gefäß wie die Umsetzung mit den Verbindungen der Formel I erfolgen. Es ist in manchen Fällen auch möglich, die Polyisocyanate mit einem Gemisch von Verbindungen der Formel I und II zur

Reaktion zu bringen. Bei der Umsetzung a) mit den Verbindungen der Formel I werden also 10 bis 70 % der NCO-Gruppen der ursprünglich eingesetzten Polyisocyanate umgesetzt. Die untere Grenze liegt bevorzugt bei 15 % und besonders bevorzugt bei 20%. Die obere Grenze liegt bevorzugt bei 45 %, besonders bevorzugt bei 40 % und in manchen Fällen sogar bei nur 30 %.

Bei der Umsetzung b) mit den Verbindungen der Formel II werden weitere 1 bis 50 % der NCO-Gruppen der ursprünglich eingesetzten Polyisocyanate umgesetzt. Die untere Grenze liegt bevorzugt bei 5 % und besonders bevorzugt bei 15 %. Die obere Grenze liegt zweckmäßig bei 45 %, bevorzugt bei 40 % und in manchen Fällen bevorzugt bei 30 %.

Insgesamt werden jedoch bei den Reaktionen a) and b) mindestens 20 % und höchstens 85 % der NCO-Gruppen der ursprünglich eingesetzten Polyisocyanate umgesetzt, wobei die untere Grenze bevorzugt bei 30 % liegt. Die obere Grenze liegt zweckmäßig bei 65 %, bevorzugt bei 60 % und in manchen Fällen bevorzugt bei 50 %. Wenn also beispielsweise gemäß a) die ursprünglich eingesetzten Isocyanate mit Verbindungen der Formel I in solchen Mengen zur Reaktion gebracht werden, daß 15 % der NCO-Gruppen umgesetzt sind, müssen bei der Umsetzung b) die Verbindungen der Formel II in solchen Mengen eingesetzt werden, daß dabei mindestens 5 % der NCO-Gruppen der ursprünglich eingesetzten Polyisocyanate umgesetzt sind, insgesamt also 15 + 5 = 20 %.

Die Verbindungen der Formel II unterscheiden sich von denjenigen der Formel I im wesentlichen dadurch, daß sie zwei oder drei funktionelle Gruppen enthalten, die mit den Isocyanatgruppen reagieren. Bevorzugt sind diese funktionellen Gruppen Hydroxylgruppen, weil diese Verbindungen leicht zugänglich und im Handel erhältlich sind und die erhaltenen Reaktionsprodukte gut löslich in Lösungsmitteln sind, die beim späteren Einsatz der Dispergiermittel gemäß der Erfindung zur Anwendung kommen. Verbindungen der Formel II sind Diole und Triole, Diamine, Dihydroxydialkylsulfide und Dihydroxysulfone wie Butandiol, Hexandiol, Cyclohexandimethanol, Neopentylglykol, Ethylenglykol, Glycerin, Trimethylolpropan, Di(4-Hydroxyphenyl)sulfon, Bis(hydroxyalkyl)polydimethylsiloxane, hydroxyfunktionelle Polybutadiene mit einer mittleren Funktionalität von 2 bis 3. Eine bevorzugte Gruppe von Verbindungen der Formel II sind Polyoxyalkylenglykole zweckmäßig mit Alkylengruppen mit 2 bis 4, vorzugsweise 2 Kohlenstoffatomen, und vorzugsweise mit Molekulargewichten im Bereich von zweckmäßig 400 bis 2000, vorzugsweise 600 bis 1500. Ethoxilate mit 3 Hydroxylgruppen erhält man durch Polymerisation unter Verwendung von trifunktionellen Alkoholen als Starterkomponente. Bevorzugt als Polyoxyalkylenglykole sind Polyethylenglykole.

Vorteilhaft werden als Verbindungen der Formel II Hydroxypolyester mit 2 bis 3 OH-Gruppen und mittleren Molekulargewichten $\overline{M}_n$ von 500 bis 3000 eingesetzt.

Als Verbindungen der Formel II können auch solche eingesetzt werden, die durch Polymerisation eines Lactons, wie es bereits erwähnt wurde, mittels Di- oder Trihydroxy-Startkomponenten erhalten werden können. Zweckmäßig haben diese Polyesterpolyole ein mittleres Molekulargewicht $\overline{M}_n$ von 800 bis 2000. Als Startkomponente ist Butandiol oder Ethylenglykol bevorzugt. Es können aber auch die oben genannten Diole oder Triole als Starterkomponenten in Frage kommen.

Als Verbindungen der Formel II können auch Polyurethane, Polyether-Polyurethane, Polyester-Polyurethane und/oder Polyether-Polyester-Polyurethane eingesetzt werden, die durch Additionsreaktion eines Diisocyanates mit einer Dihydroxyverbindung analog zu den entsprechenden Verbindungen nach Formel I erhalten werden können. Als Reaktionskomponenten können die bereits bei den entsprechenden urethanhaltigen Verbindungen nach Formel I genannten Diisocyanate und Dihydroxyverbindungen eingesetzt werden. Die auf diese Weise hergestellten Verbindungen haben eine mittlere Funktionalität von 2. Die entsprechenden trifunktionellen Verbindungen lassen sich durch Einsatz einer kleinen Menge einer trifunktionellen Starterkomponente herstellen. Als trifunktionelle Startkomponente können Triisocyanate wie die in den Formeln (1), (2) und (8) abgebildeten Verbindungen, die oben geannnten Triole, aber auch die oben genannten trihydroxyfunktionellen Polyester und Polyether eingesetzt werden. Zweckmäßig haben diese urethanhaltigen Verbindungen nach Formel II eine mittlere Funktionalität von 2 und ein mittleres Molekulargewicht von 300 bis 2500, bevorzugt von 500 bis 1500.

Die Verbindungen der Formel II bewirken eine Vernetzung zwischen den Reaktionsprodukten aus Polyisocyanat und Verbindungen der Formel I. Im einfachsten Falle werden die Ausgangsprodukte in solchen Mengen eingesetzt, daß die Verbindungen der Formel II das Zentrum des Moleküls darstellen, und daß an die Verbindungen der Formel II über die Gruppen E die Polyisocyanate gebunden sind, deren verbleibende Isocyanatgruppen mit Verbindungen der Formel I und der Formel III oder IV umgesetzt sind bzw. werden. Es kann naturgemäß auch eine gewisse Übervernetzung oder Untervernetzung vorliegen.

Eine zu starke Übervernetzung kann in gewissem Umfang dadurch verhindert werden, daß in verdünnten Lösungen in stark polaren, aprotischen Lösungsmitteln gearbeitet wird, wie Dimethylformamid, Dimethylacetamid und N-Methylpyrrolidon. Die so erhaltenen Reaktionsprodukte werden mit Verbindungen der Formel III und/oder IV in einer solchen Menge umgesetzt, daß auf jede verbleibende in den Stufen a) und b)

noch nicht umgesetzte Isocyanatgruppe mindestens 0,8 Moleküle der Formel III und/oder IV entfallen. Wenn die Verbindungen der Formel III und/oder IV nur eine Gruppe enthalten, die mit den Isocyanatgruppen reagieren kann, ist ein Überschuß nicht erforderlich; vielmehr wird auf jede noch nicht umgesetzte Isocyanatgruppe etwa 1 Molekül der Formel III und/oder IV eingesetzt. Wenn die Verbindungen der Formel III und/oder IV mehr als eine Gruppe enthalten, die mit den Isocyanaten reagieren kann, reicht es auch aus, wenn auf jede noch nicht umgesetzte Isocyanatgruppe 1 Molekül der Formel III oder IV entfällt, jedoch sollte kein großer Unterschuß eingesetzt werden, um eine unerwünschte Vernetzung zu vermeiden. Ein geringfügiger Überschuß zur Vermeidung von einer unerwünschten Vernetzung kann zweckmäßig sein. Im allgemeinen reicht ein Überschuß von 25, vorzugsweise 10 Mol % aus.

Zweckmäßig werden als Verbindungen nach Formel III und/oder IV Verbindungen eingesetzt, deren mittleres Molekulargewicht $\overline{M}_n$ nicht höher als etwa 1000 ist und deren Reste Z nicht mehr als 5 und bevorzugt 3 funktionelle Gruppen nach Anspruch 1 c enthalten.

Die Verbindungen der Formeln III und/oder IV sind dadurch gekennzeichnet, daß sie einen bzw. zwei aliphatische, cycloaliphatische und/oder aromatische Reste Z enthalten, die mindestens eine saure funktionelle Gruppierung oder mindestens

eine Alkoxysilyl-Gruppe tragen, wobei in der Regel alkoxysilylgruppenhaltige Verbindungen im Molekül nicht auch noch saure Gruppen tragen.

Als saure funktionelle Gruppierung sind bevorzugt die Carboxylgruppe, die Sulfongruppe und die Phosphonsäuregruppe und besonders bevorzugt die Carboxylgruppe.

Vorteilhaft enthält die Gruppe Z in den Formeln III und IV mindestens eine $HO_2C$- oder $HO_3S$-Gruppe.

Die Verbindungen der Formel III sind weiterhin dadurch charakterisiert, daß sie eine Gruppe Q enthalten, die zur Reaktion mit Isocyanatgruppen befähigt ist. Solche Gruppen sind -OH, $-NH_2$, -NHR (worin R für eine Alkylgruppe mit 1 bis 4 Kohlenstoffatomen steht) und -SH. Bevorzugt steht in der Formel III Q für $-NH_2$ oder -SH.

Verbindungen der Formel III, die bereits zur Herstellung von anderen Dispergiermitteln verwendet worden sind, sind, z. B. in der US-A-4 029 861 beschrieben. Beispiele für Verbindungen der Formel III sind Mercaptoessigsäure, Mercaptopropionsäure, Mercaptobernsteinsäure, Mercaptobezoesäure, Ricinolsäure, 12-Hydroxystearinsäure, Hydroxyessigsäure, Hydroxybernsteinsäure, Hydroxybuttersäure, Aminobuttersäure, 4-Aminophenylessigsäure, p-Aminobenzoesäure, Aminoessigsäure, Hydroxyethansulfonsäure, Hydroxypropansulfonsäure, Mercaptoethansulfonsäure, Aminomethansulfonsäure, 3-Aminopropansulfonsäure, Sulfanilsäure, N-(2-Hydroxyethyl)ethylendiamintriessigsäure, N-(2-Hydroxyethyl)iminodiessigsäure, 4-Aminobenzolphosphonsäure und 3-Aminopropan-1-phosphonsäure.

Werden, wie oben beschrieben, als Verbindungen der Formel III Verbindungen mit mehreren NCO-reaktiven Gruppen wie zum Beispiel Aminoalkohole eingesetzt, ist der Reaktionsverlauf sowohl von den unterschiedlichen Reaktivitäten der einzelnen NCO-Gruppen als auch von den Umsetzungsverhältnissen abhängig. Enthält die eingesetzte Verbindung als NCO-reaktive Gruppe Q eine primäre oder sekundäre Aminogruppe, so erfolgt die Addition praktisch ausschließlich über die gegenüber Isocyanaten äußerst reaktive Aminofunktion, so daß eine selektive Reaktionsführung gewährleistet ist. Enthält die einzusetzende Verbindung Z-Q dagegen sowohl in Q als auch in Z OH-Gruppen mit etwa gleicher NCO-Reaktivität, kann die Addition an das Polyisocyanat sowohl über Q als auch über Z erfolgen. Wichtig ist nur, daß auf jede umzusetzende NCO-Gruppe etwa ein Molekül Z-Q entfällt, um die Bildung nichtfunktioneller Verknüpfungsprodukte zu vermeiden. In einigen Fällen kann es daher auch zweckmäßig sein, einen leichten Überschuss an Z-Q einzusetzen.

Als Verbindungen der Formel III können auch solche eingesetzt werden, die mindestens eine Alkoxysilyl-Gruppe enthalten. Beispiele sind 3-Aminopropyl-trimethoxysilan, 3-Aminopropyl-triethoxysilan, 3-Mercaptopropyl-trimethoxysilan, p-Aminophenyltriethoxysilan, 4-Aminobutyl-triethoxysilan, 4-Aminobutyl-dimethylmethoxysilan, N-2-Aminoethyl-3-aminopropyltrimethoxysilan, 3-Aminopropyl-methyldiethoxysilan, Bis(2-Hydroxyethyl)-3-aminopropyl-triethoxysilan, Bis[3-(Triethoxysilyl)propyl] amin und Trimethoxysilylpropyldiethylentriamin.

Die Verbindungen der Formel IV sind dadurch charakterisiert, daß sie eine zur Reaktion mit Isocyanatgruppen befähigte sekundäre Aminogruppe enthalten, die zwei organische Reste Z trägt, die gleich oder verschieden sind und mindestens eine saure funktionelle Gruppierung, oder mindestens eine Alkoxysilyl-Gruppe enthalten.

Beispiele für Verbindungen der Formel IV sind Ethylendiamin-N,N'-diessigsäure, Ethylendiamin-N,N'-bis [2-(2-hydroxyphenyl)-essigsäure] Ethanolaminoessigsäure, Bis-[3-(Triethoxysilyl)propyl]amin.

Wird eine Verbindung nach Formel III oder IV eingesetzt, deren organischer Rest Z eine oder mehrere OH-Gruppen trägt, so erhält man ein Produkt, das je nach eingesetzten Mengenverhältnissen eine oder mehrere Hydroxylgruppen enthält. Diese Produkte können ohne weitere Umsetzung als Dispergiermittel und

Dispersionsstabilisatoren Verwendung finden. Es kann aber auch im Einzelfall sinnvoll sein, insbesondere zur Dispergierung von bestimmten Pigmenten, deren Oberfläche basischen Charakter hat, die OH-Gruppen in einer solchen Weise weiter umzusetzen, daß ein Produkt mit sauren funktionellen Gruppierungen entsteht. Eine solche Umwandlung läßt sich erreichen durch Umsetzung der OH-Gruppen mit einer solchen Menge an Di- oder Polycarbonsäuren oder deren Anhydriden, daß Vernetzungsreaktionen weitgehend vermieden werden. Die dabei erfolgende Bildung eines sauren Carbonsäureesters läuft z. B. mit einem 1,2-Dicarbonsäureanhydrid nach folgendem Reaktionsweg ab:

$$R\text{-}OH + \overbrace{O = C\text{-}(CH_2)_2\text{-}C = O}^{\text{-}O\text{-}} \rightarrow R\text{-}O\text{-}CO\text{-}(CH_2)_2\text{-}CO_2H \qquad (1)$$

Vernetzungsreaktionen bei der Addition von Polycarbonsäuren oder deren Anhydriden an nach Reaktionsschritt c) erhaltene OH-funktionelle Verbindungen lassen sich, wie dem Fachmann an sich bekannt ist, dadurch weitgehend vermeiden, daß auf jede umzusetzende OH-Gruppe mindestens 0,8 Moleküle, bevorzugt etwa 1 Molekül Polycarbonsäure oder Polycarbonsäureanhydrid eingesetzt werden. Ein geringfügiger Überschuß Polycarbonsäure oder Polycarbonsäureanhydrid zur Vermeidung von Vernetzungsreaktionen kann sinnvoll sein. Im allgemeinen reicht ein Überschuß von etwa 25, vorzugsweise 10 Mol.% aus.

Als Reaktionspartner für eine derartige Veresterungsreaktion können sämtliche nach dem Stand der Technik für Veresterungsreaktionen brauchbaren Polycarbonsäuren oder Polycarbonsäureanhydride eingesetzt werden, wie z. B. Bernsteinsäure, Maleinsäure, Fumarsäure, Acetylendicarbonsäure, Glutarsäure, Adipinsäure, 1,10-Dodecandicarbonsäure, Terephthalsäure, Diglykolsäure, Benzol-1,2-4-tricarbonsäure, Propen-1,2,3-tricarbonsäure,Benzol-1-2,3,4-tetracarbonsäure, Bernsteinsäureanhydrid, Maleinsäureanhydrid, Glutarsäureanhydrid, Dodecenylbernsteinsäureanhydrid, Phthalsäureanhydrid, 1,2-Cyclohexandicarbonsäureanhydrid, Benzol-1,2,4-tricarbonsäure-1,2-anhydrid, Pyromellitsäureanhydrid, 3,4,5,6-Tetrachlorphthalsäureanhydrid, 1,4,5,6-Tetrachlorphthalsäureanhydrid, 1,4,5,6,7,7-Hexachlor-5-norbornen-2,3-dicarbonsäureanhydrid.

Wie dem Fachmann bekannt, verläuft die Veresterungsreaktion eines Alkohols im allgemeinen mit einem Carbonsäureanhydrid erheblich leichter als mit der entsprechenden Carbonsäure. Daher werden bei der molaren Umsetzung von Alkoholen mit den Anhydriden von Polycarbonsäuren bevorzugt die Anhydrid-Gruppen in Reaktion treten, während die vorhandenen oder im Verlauf der Halbesterbildung entstehenden freien Carboxylgruppen weitgehend erhalten bleiben. Dies erlaubt eine selektive Reaktionsführung unter weitgehender Vermeidung von Vernetzungsreaktion. Allerdings nimmt die Selektivität der Anhydrid-Reaktion mit steigender Reaktionstemperatur ab. Zweckmäßig sollte daher zur Erzielung eines selektiven Reaktionsverlaufs die Anhydrid-Addition möglichst bei Temperaturen unterhalb 150° C durchgeführt werden.
Aus den vorstehend genannten Gründen ist es zweckmäßig, für den Reaktionsschritt nach d) die Polycarbonsäuren wenn möglich in Form ihrer Anhydride einzusetzen.

Wie dem Fachmann bekannt, sind prinzipiell auch saure funktionelle Gruppierungen wie z. B. Carboxylgruppen zur Reaktion mit NCO-Gruppen befähigt. Jedoch laufen diese Reaktionen erheblich langsamer ab als die Addition der in den erfindungsgemäßen Additionsverbindungen als Gruppe Q eingesetzten funktionellen Gruppen an die NCO-Gruppe. Aufgrund dieser unterschiedlichen Reaktivität addieren Verbindungen, die neben sauren Gruppierungen noch Amino-, Hydroxy oder Mercapto-Gruppen im Molekül tragen, praktisch ausschließlich unter Erhalt der Säurefunktion über die letztgenannten Gruppen an NCO-Gruppen.

Werden daher als Verbindungen der Formel III oder IV Verbindungen mit sauren Gruppierungen eingesetzt oder nach Reaktionsschritt c) erhaltene hydroxylgruppenhaltige Produkte mit Polycarbonsäuren oder deren Anhydriden gemäß Reaktionsschritt d) umgesetzt, dann verleihen diese sauren Gruppen den Additionsverbindungen gemäß der Erfindung ebenfalls eine Acidität, wie dem Fachmann bekannt ist.

Durch diese aciden Gruppen sind die Additionsverbindungen zur Salzbildung befähigt. Sie können im Sinne der Erfindung als Dispergiermittel auch in Form von derartigen Salzen eingesetzt werden.

Diese Salze werden aus dem erhaltenen Reaktionsprodukt durch Neutralisation mit organischen oder anorganischen Basen erhalten.

Die Herstellung der erfindungsgemäßen Additionsverbindungen kann, wie gemäß dem Stand der Technik, in Gegenwart von geeigneten Lösungsmitteln oder Lösungsmittelgemischen durchgeführt werden. Geeignet sind alle Lösungsmittel, die gegenüber den Reaktionspartnern inert sind oder deren Reaktivität gegenüber den Reaktionspartnern zu vernachlässigen ist und in denen die Reaktanden und die Reaktionsprodukte zumindest teilweise löslich sind, z.B. Kohlenwasserstoffe wie Toluol, Xylol, chlorierte Kohlenwasserstoffe wie Chloroform, Trichlorethan, cyclische und acyclische Ether wie Dioxan, Tetrahydrofuran, Polyalkylenglykoldialkylether, Ester wie Ethylacetat, Butylacetat, Butyrolacton, Alkylglykolester wie Ethylglykolacetat, Methoxypropylacetat, Ketone wie Methylisobutylketon, Cyclohexanon, Aceton, Säureamide wie Dimethylformamid, N-Methylpyrolidon usw.

Zweckmäßig wählt man das oder die Lösemittel bereits unter Berücksichtigung des geplanten Einsatzgebietes aus. Zum Beispiel werden zur Herstellung von erfindungsgemäßen Additionsverbindungen für den Einsatz in wasserverdünnbaren Lacksystemen oder zur Belegung von Pigmenten in wäßriger Suspension nach der Pigmentsynthese zweckmäßig Lösemittel eingesetzt, die ganz oder teilweise wasserverdünnbar sind.

Je nach Anwendungsgebiet können die zur Synthese verwendeten Lösungsmittel im Reaktionsgemisch verbleiben oder werden ganz oder teilweise entfernt und gegebenenfalls durch andere Lösungsmittel ersetzt.

Das Lösungsmittel kann zum Beispiel durch Abdestillieren, gegebenenfalls bei reduziertem Druck und/oder azeotrop unter Zusatz von Wasser, ganz oder teilweise entfernt werden. Die Wirksubstanz kann aber auch durch Ausfällen durch Zusatz von Nichtlösern wie aliphatischen Kohlenwasserstoffen, beispielsweise Hexan, anschließendes Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösungsmittel angelöst werden oder gegebenenfalls in reiner Form z. B. bei Pulverlacken, eingesetzt werden. Gegebenenfalls kann das Lösungsmittel, in dem das Additionsprodukt gelöst ist, nach Zusatz von geeigneten höher siedenden Lösungsmitteln, gegebenenfalls unter vermindertem Druck und/oder azeotrop unter Zusatz von Wasser, abdestilliert werden und damit das Additionsprodukt in ein für das jeweilige Anwendungsgebiet geeignetes Lösungsmittel überführt werden.

Weiterhin können die Umsetzungen in Gegenwart von üblichen Katalysatoren durchgeführt werden, z. B. organischen Zinnverbindungen, wie Dibutylzinndilaurat, anderen organometallischen Verbindungen wie Eisenacetylacetonat, tertiären Aminen wie Triethylendiamin. Es wird insofern auf die eingangs zitierten Patentschriften verwiesen.

Durch Variation der Substituenten der Formel I und II und/oder deren Mengenverhältnissen kann die Verträglichkeit der erfindungsgemäßen Additionsverbindungen auf die unterschiedlichsten polymeren Verbindungen abgestimmt werden, welche in Überzugs- und Formmassen vorliegen in denen die Additionsverbindungen gemäß der Erfindung zur Anwendung kommen. Wenn z. B. in einem Lack das Bindemittel ein Polyester ist, ist es zweckmäßig, solche Additionsverbindungen gemäß der Erfindung hierfür einzusetzen, die in ihrem Molekül aufgrund der in den Ausgangsverbindungen der Formel I und II enthaltenen Gruppen auch Polyestergruppen oder ähnliche Gruppen enthalten, die - wie dem Fachmann bekannt ist, mit Polyestern verträglich sind. Das gleiche gilt sinngemäß für z. B. Polyethylene oder Polyamide. Hiermit sind besonders verträglich solche Additionsverbindungen gemäß der Erfindung, die wenig polare Gruppen enthalten. Sinngemäß gilt dies für die Substituenten der Formel III oder IV, die von besonderem Einfluß sind auf die Affinität der Additionsverbindungen gemäß der Erfindung zu den verwendeten Feststoffen, die dispergiert werden sollen.

Die Erfindung wird durch die folgenden Beispiele zusätzlich erläutert. Teile sind Gewichtsteile, sofern nichts anderes gesagt ist. Bei molekular uneinheitlichen Verbindungen, wie Polymeren, sind die angegebenen Molekulargewichte Durchschnittswerte nach Zahlenmittel ($M_n$). Die Molekulargewichte bzw. mittleren Molekulargewichte $M_n$ können nach üblichen Verfahren bestimmt werden, z. B. durch Ermittlung der OH-Zahl, der Amin-Zahl oder kryoskopisch.

Der NCO-Gehalt der zum Einsatz kommenden Polyisocyanate sowie der Reaktionsverlauf der Addition wird durch Methoden ermittelt, wie sie beschrieben sind bei Saul Patai "The Chemistry of Cyanates and their Thioderivates", Part I, Chapter 5, 1977.

Die quantitative Bestimmung des Carbonsäureanhydridgehaltes erfolgt nach Methoden, wie sie beschrieben sind bei Houben-Weyl "Methoden der organischen Chemie", Band II, S. 510, 1953.

Herstellungsbeispiele für Verbindungen der Formel I

Polyester A:

Unter Schutzatmosphäre werden 4,9 Teile n-Butanol und 95,1 Teile Caprolacton homogenisiert, mit 0,002 Teilen Dibutylzinndilaurat versetzt und auf 160° C erhitzt. Man rührt bei dieser Temperatur, bis ein Festkörpergehalt von 98 % erreicht ist. Der erhaltene Polyester hat ein mittleres Molekulargewicht $\overline{M}_n$ von 1500.

Polyester B bis G:

Es wird analog zur Herstellung von Polyester A verfahren, jedoch anstelle von n-Butanol und Caprolacton die in der Tabelle aufgeführten Verbindungen in den angegebenen Mengen eingesetzt.

| Polyester | $\overline{M}_n$ | Ausgangsmaterial | Teile |
|---|---|---|---|
| B | 1000 | 2-Ethylhexanol<br>Caprolacton | 13,0<br>87,0 |
| C | 1100 | 2-Phenylethanol<br>Caprolacton | 11,4<br>88,6 |
| D | 2000 | Heptadecafluordecanol<br>2-Ethylhexanol<br>Caprolacton | 2,2<br>5,9<br>91,9 |
| E | 1500 | Stearylalkohol<br>$\delta$ - Valerolacton | 18,0<br>82,0 |
| F | 1500 | Polyethylenglykolmonomethylether ($\overline{M}_n$ = 550)<br>Caprolacton | 35,3<br>64,7 |
| G | 1200 | 2-Phenylpropanol-1<br>Caprolacton | 11,5<br>88,5 |

Polyester H:

Unter Schutzgas werden 42,2 Teile Ricinolsäure und 7,8 Teile Tripropylenglykolmonomethylether mit 50 Teilen Xylol zum Sieden erhitzt. Das entstehende Reaktionswasser wird durch azeotrope Destillation aus dem Gemisch entfernt. Die Reaktion ist beendet, sobald sich kein Wasser mehr abscheiden läßt. Nach Abdestillieren des Lösungsmittels unter vermindertem Druck erhält man einen Monohydroxypolyester mit einem mittleren Molekulargewicht $\overline{M}_n$ von 1300.

Polyester K:

Analog zu Beispiel H werden 43,6 Teile 12-Hydroxystearinsäure mit 6,4 Teilen 2-Phenylethanol zu einem Polyester mit $\overline{M}_n$ = 950 umgesetzt.

Herstellungsbeispiel für Verbindungen der Formel II

Polyester L:

Analog zu Beispiel A werden 16,8 Teile Dodecandiol-1,12 und 83,2 Teile Caprolacton zu einem Polyesterdiol mit $\overline{M}_n$ = 1200 umgesetzt.

Allgemeine Herstellungsvorschrift für die Beispiele 1 bis 21

Stufe a: Unter Schutzgas werden die in der Tabelle aufgeführten Ausgangsmaterialien in den angegebenen Mengenverhältnissen zusammengegeben, mit 0,01 Teilen Dibutylzinndilaurat versetzt und bei 80° C gerührt. Die erste Stufe ist beendet, sobald der in der Tabelle angebene Anteil an ursprünglich eingesetzten NCO-Gruppen abreagiert ist.

Stufe b: Nach Beendigung der ersten Stufe werden die Komponenten der Stufe b) hinzugefügt und das Reaktionsgemisch weiter bei 80° C gerührt bis der in der Tabelle angebene NCO-Umsetzungsgrad erreicht ist.

Stufe c: Zur Abreaktion der verbleibenden NCO-Gruppen wird das Reaktionsgemisch mit den Komponenten der Stufe c) versetzt und noch 1 Stunde bei 80° C gerührt.
Die Festkörper der erhaltenen Produkte sind in der nachstehenden Tabelle aufgeführt.

Bei den Herstellungsbeispielen kommen die folgenden Polyisocyanate zum Einsatz (die Numerierung bezieht sich auf die im weiter vorne stehenden Text gezeigten Formelbilder):

| | |
|---|---|
| Polyisocyanat (1): | Aromatisches Polyisocyanat auf Basis Toluylendiisocyanat (TDI) nach Formel (1); 75%-ig in Ethylacetat; z. B. Desmodur L |
| Polyisocyanat (2): | Aliphatisches Polyisocyanat auf Basis Hexamethylendiisocyanat (HMDI) nach Formel (2); 75%-ig in Xylol/Ethylglykolacetat 1:1; z.B. Desmodur N. |
| Polyisocyanat (3): | Aromatisch-aliphatisches Polyisocyanat auf Basis HMDI/TDI nach Formel (3); 60%-ig in Ethylacetat; z. B. Desmodur HL |
| Polyisocyanat (4): | Aromatisches Polyisocyanat auf Basis TDI nach Formel (4): 51%-ig in Butylacetat; z.B. Desmodur IL. |
| Polyisocyanat (5): | Aromatisches Polyisocyanat auf Basis TDI nach Formel (5); 50%-ig in Isobutylacetat; z.B. Polyurene KC. |
| Polyisocyanat (6): | Aromatisches Polyisocyanat auf Basis TDI/Diphenylmethan-4,4-diisocyanat nach Formel (6); 50%-ig in Isobutylacetat; z. B. Polyurene HR. |

| Beispiel Nr. | Stufe a) Komponenten | Teile | %/NCO | Stufe b) Komponenten | Teile | %/NCO | Stufe c) Komponenten | Teile | Fest-körper % |
|---|---|---|---|---|---|---|---|---|---|
| 1 | Polyisocyanat (2) | 8,8 | | Polyethylenglykol ($\bar{M}_n$ = 1000) | 3,0 | | 3-Aminopropanol | 1,5 | |
| | Polyester A | 18,9 | 35 | Xylol | 41,3 | 66 | Xylol | 3,2 | 30 |
| | Xylol | 23,3 | | | | | | | |
| 2 | Polyisocyanat (1) | 8,4 | | Polyethylenglykol ($\bar{M}_n$ = 1000) | 0,8 | | p-Aminobenzoesäure | 2,1 | |
| | Polyester A | 15,8 | 40 | Xylol | 31,8 | 48 | NMP[1)] | 21,0 | 25 |
| | Xylol | 20,1 | | | | | | | |
| 3 | Polyisocyanat (3) | 12,9 | | Polyethylenglykol ($\bar{M}_n$ = 600) | 0,9 | | Mercaptobernsteinsäure | 2,5 | |
| | Polyester A | 18,8 | 40 | Xylol | 37,8 | 50 | Xylol | 5,7 | 30 |
| | Xylol | 21,4 | | | | | | | |
| 4 | Polyisocyanat (4) | 15,2 | | Polyethylenglykol ($\bar{M}_n$ =200) | 0,5 | | Aminoethoxyethanol | 1,5 | |
| | Polyester A | 20,2 | 45 | Xylol | 38,8 | 57 | Xylol | 3,2 | 30 |
| | Xylol | 20,6 | | | | | | | |
| 5 | Polyisocyanat (5) | 14,4 | | Polyethylenglykol ($\bar{M}_n$ = 1000) | 1,3 | | Diisopropanolamin | 1,9 | |
| | Polyester G | 12,4 | 40 | Xylol | 38,9 | 51 | Xylol | 4,3 | 23 |
| | Xylol | 26,8 | | | | | | | |

| Beispiel Nr. | Stufe a) Komponenten | Teile | %/NCO | Stufe b) Komponenten | Teile | %/NCO | Stufe c) Komponenten | Teile | Fest-körper % |
|---|---|---|---|---|---|---|---|---|---|
| 6 | Polyisocyanat (2) | 9,3 | | Polyethylenglykol ($\bar{M}_n$ = 800) | 2,4 | | 3-Aminopropanol | 1,3 | |
| | Polyester A | 19,3 | 35 | Xylol | 40,6 | 55 | Xylol | 3,1 | 30 |
| | Xylol | 24,0 | | | | | | | |
| 7 | Polyisocyanat (2) | 9,7 | | Polypropylenglykol ($\bar{M}_n$ = 1000) | 1,2 | | p-Aminobenzoesäure | 3,1 | |
| | Polyester B | 13,4 | 35 | Xylol | 30,5 | 45 | NMP | 23,9 | 25 |
| | Xylol | 18,2 | | | | | | | |
| 8 | Polyisocyanat (2) | 10,3 | | Polytetrahydrofurandiol ($\bar{M}_n$=1000) | 3,0 | | Sulfanilsäure | 3,2 | |
| | Polyester C | 16,2 | 40 | Xylol | 39,0 | 60 | NMP/DMF[2)] 1:2 | 6,9 | 30 |
| | Xylol | 21,4 | | | | | | | |
| 9 | Polyisocyanat (6) | 11,4 | | Polyethylenglykol ($\bar{M}_n$ = 800) | 0,9 | | Mercaptobenzoesäure | 1,3 | |
| | Polyester A | 16,1 | 50 | Xylol | 38,9 | 62 | Xylol | 3,8 | 24 |
| | Xylol | 27,5 | | | | | | | |
| 10 | Polyisocyanat (1) | 11,9 | | Polyethylenglykol ($\bar{M}_n$ = 1000) | 2,0 | | Diisopropanolamin | 3,0 | |
| | Polyester F | 13,0 | 25 | Xylol | 33,8 | 42 | Xylol/NMP (2:3) | 17,4 | 27 |
| | Xylol | 18,9 | | | | | | | |
| 11 | Polyisocyanat (1) | 7,2 | | Polytetrahydrofurandiol ($\bar{M}_n$=1000) | 2,9 | | 3-Aminopropanol | 0,8 | |
| | Polyester D | 10,9 | 25 | Xylol | 28,5 | 68 | NMP | 35,2 | 20 |
| | Xylol | 14,5 | | | | | | | |

| Beispiel Nr. | Stufe a) Komponenten | Teile | %/NCO | Stufe b) Komponenten | Teile | %/NCO | Stufe c) Komponenten | Teile | Fest-körper % |
|---|---|---|---|---|---|---|---|---|---|
| 12 | Polyisocyanat (1) | 13,9 | | Polyethylenglykol ($M_n$=1000) | 2,3 | | Isopropanolamin | 2,0 | |
| | Polyester F | 15,2 | 25 | Xylol | 39,7 | 42 | Xylol | 4,7 | 30 |
| | Xylol | 22,2 | | | | | | | |
| 13 | Polyisocyanat (2) | 16,0 | | 1,4-Diaminobutan | 0,5 | | Mercaptobernsteinsäure | 5,7 | |
| | Polyglykolmonobutylether 3) $M_n$=1000 | 11,8 | 20 | Xylol | 32,8 | 40 | Xylol | 13,4 | 30 |
| | Xylol | 19,8 | | | | | | | |
| 14 | Polyisocyanat (2) | 8,9 | | Dihydroxypolybutadien ($M_n$ = 1000) | 2,2 | | Mercaptobenzoesäure | 2,7 | |
| | Polyester E | 18,4 | 37 | Xylol | 38,6 | 54 | Xylol | 6,4 | 30 |
| | Xylol | 22,8 | | | | | | | |
| 15 | Polyisocyanat (2) | 10,0 | | Polypropylenglykol ($M_n$=1000) | 4,4 | | Mercaptobenzoesäure | 3,2 | |
| | Polyester E | 14,9 | 25 | | | 66 | Xylol | 7,5 | 30 |
| | Xylol | 19,8 | | Xylol/NMP 1:1 | 40,2 | | | | |
| 16 | Polyisocyanat (1) | 13,2 | | Polyester L | 3,3 | | p-Aminobenzoesäure | 3,1 | |
| | Methoxypolyethylenglykol ($M_n$= 750 ) | 8,7 | 30 | Xylol | 32,6 | 52 | NMP | 23,8 | 25 |
| | Xylol | 15,3 | | | | | | | |
| 17 | Polyisocyanat (4) | 22,8 | | Trimethylolpropan | 0,5 | | ß-Aminopropanol | 1,6 | |
| | Polyester H | 16,3 | 40 | Xylol | 30,6 | 67 | Xylol | 3,6 | 30 |
| | Xylol/NMP 1:2,5 | 24,6 | | | | | | | |

| Beispiel Nr. | Stufe a) Komponenten | Teile | %/NCO | Stufe b) Komponenten | Teile | %/NCO | Stufe c) Komponenten | Teile | Festkörper % |
|---|---|---|---|---|---|---|---|---|---|
| 18 | Polyisocyanat (2) | 15,2 | | 1,4-Diaminobutan | 0,5 | | 3-Aminopropyltrimethoxysilan | 6,9 | |
| | Polyglykolmonobutylether 3) ($\bar{M}_n$=1000) | 11,2 | 20 | Xylol | 31,3 | 37 | Xylol | 16,0 | 30 |
| | Xylol | 18,9 | | | | | | | |
| 19 | Polyisocyanat (3) | 14,9 | | Polyethylenglykol ($\bar{M}_n$=600) | 1,3 | | p-Aminobenzoesäure | 2,3 | |
| | Polyester K | 12,5 | 40 | Xylol | 13,1 | 64 | NMP | 22,1 | 25 |
| | Xylol/NMP 1:1 | 33,8 | | | | | | | |
| 20 | Polyisocyanat (1) | 12,5 | | Polyethylenglykol ($\bar{M}_n$=1000) | 3,9 | | 3-Aminopropanol | 1,4 | |
| | Methoxypolyethylenglykol ($\bar{M}_n$=750) | 8,3 | 30 | Xylol/NMP 7:3 | 43,8 | 60 | NMP | 15,6 | 23 |
| | Xylol | 14,5 | | | | | | | |
| 21 | Polyisocyanat (6) | 17,1 | | Ethoxiliertes Stearylamin ($\bar{M}_n$=750) | 1,1 | | Tris(hydroxymethyl)-aminomethan | 1,3 | |
| | Polyester K | 10,5 | 60 | | | 68 | | | 21 |
| | Xylol/NMP 3:2 | 46,1 | | Xylol | 20,8 | | DMF | 3,1 | |

1)NMP = N-Methylpyrrolidon
2)DMF = Dimethylformamid
3)Ethylenoxid-Propylenoxid-Polymerisat (EO:PO=1:1)

Beispiel 22

Unter Schutzgas werden 97,7 Teile des nach Beispiel 1 erhaltenen Produktes mit 2,3 Teilen Maleinsäureanhydrid versetzt. Das Gemisch wird auf 100° C erhitzt und solange bei dieser Temperatur gerührt, bis

analytisch keine Anhydridgruppen mehr nachweisbar sind (etwa 5 Stunden). Das Endprodukt ist eine schwach gelbe Flüssigkeit mit einem Festkörpergehalt von 32 %.

Beispiel 23

Nach dem unter Beispiel 22 angegebenen Verfahren werden 96,8 Teile des nach Beispiel 6 erhaltenen Produktes mit 3,2 Teilen Maleinsäureanhydrid umgesetzt. Man erhält eine schwach gelbe Flüssigkeit mit einem Festkörpergehalt von 32 %.

Beispiel 24

Nach dem unter Beispiel 22 angegebenen Verfahren werden 96,6 Teile des nach Beispiel 5 erhaltenen Produktes mit 3,4 Teilen Phthalsäureanhydrid umgesetzt. Man erhält eine schwach gelbe Flüssigkeit mit einem Festkörpergehalt von 32 %.

Beispiel 25

Nach dem unter Beispiel 22 angegebenen Verfahren werden 97,6 Teile des nach Beispiel 5 erhaltenen Produktes mit 2,4 Teilen Maleinsäureanhydrid umgesetzt. Die so erhaltene gelbliche Flüssigkeit hat einen Festkörpergehalt von 32 %.

Beispiel 26

Unter Schutzgas werden 11,9 Teile Polyisocyanat (4) mit 0,6 Teilen Octanol, gelöst in 9,6 Teilen Ethylacetat und 0,003 Teilen Dibutylzinndilaurat unter Rühren versetzt und auf 60° C erhitzt. Sobald 19 % der eingesetzten NCO-Gruppen abreagiert sind, werden 0,007 Teile Ethylenglykol 10%ig in NMP angelöst zugegeben und die Temperatur der Mischung wird auf 70° C erhöht. Nach Abreaktion von 20 % der ursprünglich eingesetzten NCO-Gruppen werden 3,4 Teile Zitronensäure gelöst in 74,6 Teilen NMP zugegeben. Man rührt noch eine Stunde bei 70° C. Die erhaltene Produktlösung ist niedrigviskos, klar und leicht gelb und hat einen Festkörper von 10 %.

Beispiel 27

Unter Schutzgas wird eine Lösung von 39,3 Teilen 2-Ethylhexylacrylat, 2,9 Teilen 2-Mercaptoethanol, 1,1 Teilen Azobis-(isobutyronitril) und 20 Teilen Ethylacetat zu 36,7 Teilen siedendem Ethylacetat so zugetropft, daß die Temperatur der Reaktionsmischung 85° C nicht übersteigt. Nach beendeter Zugabe wird noch 2 Stunden unter Rückfluß gerührt. Das Reaktionsgemisch wird nach wiederholtem Waschen mit verdünnter NaCl-Lösung mit 200 ml Toluol versetzt und über Molekularsieb getrocknet. Nach dem Abfiltrieren wird solange abdestilliert, bis der Rückstand einen Festkörper von 92 % aufweist.
16,8 Teile des so erhaltenen Polyacrylates nach Formel I werden mit 9,3 Teilen Polyisocyanat (2), 18,8 Teilen PMA (Propylenglykolmonomethyletheracetat) und 0,01 Teilen DBTL (Dibutylzinndilaurat) versetzt und unter Schutzgas bei 80° C gerührt. Nachdem 40 % der ursprünglich eingesetzten NCO-Gruppen abreagiert sind, gibt man 3,5 Teile Polyethylenglykol ($\overline{M}_n$ = 1000) und 38,3 Teile PMA zu. Nachdem weitere 20 % der ursprünglich eingesetzten NCO-Gruppen abreagiert sind, versetzt man die Mischung mit 2 g p-Aminobenzoesäure in 11,3 g PMA/NMP (4:6) und rührt noch 1 Stunde bei 80° C. Das mittelviskose Endprodukt hat einen Festkörper von 28 %.

Beispiel 28

Unter Schutzgas werden 44,8 Teile n-Butylacetat, 25,9 Teile IPDI (Isophorondiisocyanat), 27 Teile 1,6-Hexandiol, 2,2 Teile n-Butanol und 0,001 Teile DBTL solange bei 70° C gerührt, bis sämtliche NCO-Gruppen abreagiert haben. Zu 23,2 Teilen der so erhaltenen Polyurethanlösung nach Formel I werden 6,3 Teile Polyisocyanat (2), 3,2 Teile PMA und 0,01 Teile DBTL gegeben und auf 80° C erhitzt. Nachdem 40 % der eingesetzten NCO-Gruppen abreagiert sind, gibt man bei 80° C 2,4 Teile Polyethylenglykol ($\overline{M}_n$ = 1000) und 27,4 Teile PMA zu. Nachdem weitere 20 % der ursprünglich eingesetzten NCO-Gruppen abreagiert sind, werden 1,2 Teile p-Aminobenzoesäure in 36,2 Teilen NMP zugegeben und noch 1 Stunde bei 80° C gerührt. Das erhaltene farblose Endprodukt hat einen Festkörper von 20%.

Beispiel 29

a) Unter Schutzgas werden 28,3 Teile IPDI, 41,4 Teile 1,12-Dodecandiol, 29,9 Teile Xylol und 0,005 Teile DBTL solange bei 70 °C gerührt, bis sämtliche NCO-Gruppen abreagiert haben.
b) 11,0 Teile Polyisocyanat (2), 33,3 Teile Polyester H, 16,3 Teile NMP und 0,01 Teile DBTL werden unter Schutzgas bei 80° C gerührt. Nachdem 40 % der NCO-Gruppen agreagiert sind, werden 5 Teile des unter a) erhaltenen Polyurethandiols nach Formel II und 3,7 Teile Xylol zugegeben. Nachdem weitere 20% der ursprünglich eingesetzten NCO-Gruppen abreagiert sind, werden 2,3 Teile p-Aminobenzoesäure und 28,4 Teile Xylol zugegegeben und die Mischung noch 1 Stunde bei 80° C gerührt. Das mittelviskose Endprodukt hat einen Festkörper von 30 %.

Verwendungsbeispiel

Mahlgut

Zur Herstellung des Mahlgutes werden 22 Gewichtsteile zweier 14%-iger Alkydharze mit 6 Gewichtsteilen eines Lösungsmittelgemisches (Aromatenfraktion Kp = 162 - 177° C: Butylacetat : Xylol = 4 : 0,8 : 1,2) in ein temperiertes (40° C) Edelstahlrührgefäß eingewogen und gemischt. Danach erfolgt die Zugabe von X Gewichtsteilen der erfindungsgemäßen Additionsverbindung bzw. Vergleichsverbindung. Nach erfolgter Homogenisierung werden Y Gewichtsteile Pigment hinzugefügt (Tabelle 1). Die Gewichtsteile der erfindungsgemäßen Additionsverbindung bzw. Vergleichsverbindung sind berechnet als 100 % Festkörper.

Man homogenisiert, setzt 150 Gewichtsprozent Glasperlen, bezogen auf den Mahlansatz, hinzu und dispergiert mit einem handelsüblichen Dispergiergerät 30 Minuten bei 40° C, indem mit einer der Gefäßgröße angepaßten Polypropylenscheibe mit einer Umfangsgeschwindigkeit von etwa 8 m . $s^{-1}$ gerührt wird.

Gesamtformulierung

Zum Mahlgut gibt man das Auflackgut, bestehend aus 23,4 Gewichtsteilen der beiden Alkydharze, Festkörper = 15 %, 14 Gewichtsteilen Hexa(methoxymethyl)melaminharz, Fk = 9,8 % und 14,6 Gewichtsteilen eines Lösemittelgemisches (Aromatenfraktion Kp = 187 - 207° C : Aromatenfraktion Kp = 162 - 177° C : Xylol : Butanol = 35 : 20 : 35 : 10). Zur Homogenisierung wird der Ansatz 2 Minuten mit ca. 2 m . $s^{-1}$ gerührt. Danach werden die Glasperlen abfiltriert. Vor der weiteren Verarbeitung läßt man den Lack 12 bis 15 Stunden bei Raumtemperatur ruhen.
Ein Teil des so hergestellten Lacks wird dann wie nachfolgend beschrieben weiterverarbeitet, und ein Teil des so hergestellten Lacks wird nach 14tägiger Lagerung bei 50° C in der gleichen nachfolgend beschriebenen Weise weiterverarbeitet. Die Ergebnisse, die mit dem sofort weiterverarbeiteten Lack erhalten werden, sind in Tabelle 2 zusammengestellt, während die Ergebnisse, die mit dem nach 14 tägiger Lagerung verarbeiteten Lack erhalten werden, in Tabelle 3 zusammengestellt sind.

Mit dem Lösemittelgemisch, das auch in Auflackgut enthalten ist, wird der Lack auf 20" DIN 4/23° C eingestellt. Nach einer Stunde Lagerung bei Raumtemperatur wird der eingestellte Lack auf eine gereinigte, in einem Winkel von 80° geneigte Glasplatte aufgegossen.
Nach dem Einbrennen bei 140° C (30 Minuten) wird der Lackfilm auf Glanz und Transparenz sowie unter einem Lichtmikroskop auf Teilchengröße bzw. auf Flockulation bewertet.
Die Bewertung erfolgt nach einer Zahlenskala von 0 bis 10, wobei 0 = keine Flockulation, hoher Glanz, gute Transparenz und 10 = totale Flockulation, kein Glanz, keine Transparenz bedeutet.
Die erhaltenen Ergebnisse sind in den Tabellen 2 und 3 in der Zeile "Buntlack" wiedergegeben.

Eine weitere Methode zur Bestimmung der Pigmentgrößenverteilung und der Pigmentstabilisierung im Lack ist die Abmischung mit einem Weißlack und der nachfolgende Rubout-Test (Weißabmischung): Hierzu läßt man den aufgegossenen Lack ablüften (etwa 10 Minuten) und reibt mit dem Finger die Probe bis zur Farbkonstanz aus.
Dazu werden die Stammlacke der Buntpigmente I bis VIII laut Tabelle 1 mit einem Weißlack (Y = 25 Gewichtsteile Titandioxid und X = 0,75 Gewichtsteile entsprechende erfindungsgemäße Additionsverbindung wie im Buntlack bzw. Vergleichsbeispiel; Bindemittel wie abzumischender Buntlack im Verhältnis 1:4 gemischt, homogenisiert und auf 16" DIN 4/23 eingestellt. Man gießt auf eine 80° geneigte Glasplatte auf und macht, nach Ablüftung (etwa 10 Minuten), den Rubout-Test.
Nach Aushärtung des Films wird die Farbstärke sowohl der ausgeriebenen als auch der nicht-ausgeriebenen Probe bewertet. Dazu wurde wieder eine Skala von 0 bis 10 gewählt, wobei

0 = gleiche Farbstärke, gleicher Farbton, kein Ausschwimmen, also kein feststellbarer Unterschied zwischen ausgeriebener und nicht-ausgeriebener Probe und
10 = völlig veränderte Farbstärke und Ausschwimmen eines Pigments bedeutet. Die erhaltenen Ergebnisse sind in den Tabellen 2 und 3 in der Zeile "Weißabmischung" angegeben.
Als Vergleichsverbindung wurde Beispiel 16 der EP-A-0154678 eingesetzt, die sich von den erfindungsgemäßen Additionsverbindungen bei vergleichbarem Molekülaufbau im wesentlichen durch ihren basischen Charakter unterscheidet.

Tabelle 1

| Eingesetztes Pigment | Versuch | Y Teile | erfindungsgemäße Additionsverbindung bzw. Vergleichsbeispiel* | X Teile |
|---|---|---|---|---|
| Eisenoxidrot C.I.1 PR 101 C.I.2 77491 (Bayferrox 130®) | I A | 10 | Beispiel 13 | 0,5 |
| | I V | 10 | Vergleichsbeispiel | 0,5 |
| Eisenoxidgelb C.I.1 PY 42 C.I.2 77492 (Bayferrox 3920®) | II A | 10 | Beispiel 17 | 0,2 |
| | II V | 10 | Vergleichsbeispiel | 0,2 |
| Chromtitangelb C.I.1 PBr 24 C.I.2 77310 (Sicotangelb L 1910®) | III A | 20 | Beispiel 18 | 1,0 |
| | III V | 20 | Vergleichsbeispiel | 1,0 |
| Nickeltitangelb C.I.1 PY53 C.I.2 77778 (Lichtgelb 8G®) | IV A | 20 | Beispiel 14 | 1,0 |
| | IV V | 20 | Vergleichsbeispiel | 1,0 |
| Gasruß Regular Color Channel (Printex U®) | V A | 3 | Beispiel 7 | 0,6 |
| | V V | 3 | Vergleichsbeispiel | 0,6 |
| Perylenrot C.I.1 PR 224 C.I.2 71127 (Perrindo Rot R 6418®) | VIA | 5 | Beispiel 9 | 0,75 |
| | VI V | 5 | Vergleichsbeispiel | 0,75 |
| Chinophthalongelb C.I.1 PY 138 (Paliotolgelb L 0962 HD®) | VII A | 5 | Beispiel 9 | 0,75 |
| | VII V | 5 | Vergleichsbeispiel | 0,75 |
| Dioxazin Violett C.I.1 PV 23 C.I.2 51319 (Hostaperm Violett RL spez.®) | VIII A | 5 | Beispiel 9 | 0,75 |
| | VIII V | 5 | Vergleichsbeispiel | 0,75 |

*Vergleichsbeispiel: Beispiel 16 von EP-A-0 154 678

Tabelle 2

| Pigmente | I | | II | | III | | IV | | V | | VI | | VII | | VIII | |
|---|---|---|---|---|---|---|---|---|---|---|---|---|---|---|---|---|
| | A | V | A | V | A | V | A | V | A | V | A | V | A | V | A | V |
| Buntlack | 0 | 6 | 0 | 8 | 0 | 6 | 0 | 10 | 1 | 5 | 1 | 6 | 0 | 4 | 2 | 7 |
| Weißabmischung | 0 | 7 | 0 | 8 | 0 | 6 | 1 | 9 | 0 | 7 | 1 | 7 | 0 | 5 | 2 | 7 |
| A = erfindungsgemäße Additionsverbindung<br>V = Vergleichsbeispiel | | | | | | | | | | | | | | | | |

Tabelle 3

| (14 Tage Lagerung bei 50° C) | | | | | | | | | | | | | | | | |
|---|---|---|---|---|---|---|---|---|---|---|---|---|---|---|---|---|
| Pigmente | I | | II | | III | | IV | | V | | VI | | VII | | VIII | |
| | A | V | A | V | A | V | A | V | A | V | A | V | A | V | A | V |
| Buntlack | 0 | 8 | 0 | 9 | 0 | 7 | 0 | 10 | 1 | 6 | 1 | 7 | 0 | 6 | 2 | 9 |
| Weißabmischung | 0 | 8 | 0 | 9 | 0 | 8 | 0 | 9 | 0 | 7 | 1 | 7 | 1 | 8 | 3 | 10 |
| A = erfindungsgemäße Additionsverbindung<br>V = Vergleichsbeispiel | | | | | | | | | | | | | | | | |

Die mit den erfindungsgemäßen Additionsverbindungen erhaltenen Lacke bewirken eine erheblich bessere Stabilisierung der Pigmente.

Verwendungsbeispiel IX:

100 Teile einer wässrig-isobutanolischen Pigmentsuspension (Isobutanolgehalt 50 %, Pigmentgehalt 10 %) von C.I.1 Pigment Red 224 (71127) werden bei 50° C unter Rühren mit 6 Teilen der gemäß Beispiel 20 erhaltenen Additivlösung langsam versetzt. Danach wird 5 Stunden bei 50° C gerührt. Anschließend wird das Lösungsmittel mit Wasserdampf abdestilliert, das Pigment abfiltriert, mit Wasser gewaschen, getrocknet und gemahlen.
Die mit dem so behandelten Pigment hergestellten Volltonlackierungen zeichnen sich durch sehr gute rheologische Eigenschaften und hervorragenden Glanz aus.
Wiederholt man zum Vergleich die beschriebene Behandlung C.I. Pigment Red 224 im Isobutanol-Wasser-Gemisch ohne Zusatz der Additionsverbindung, so erhält man ein Pigment, dessen Volltonlackierung einen deutlich schlechteren Glanz aufweist.

Verwendungsbeispiel X:

Verfährt man wie in Beispiel IX, setzt aber anstelle des dort genannten Pigments 9 Teile C.I.1 Pigment Brown 24 mit 4 Teilen Additionsverbindung gemäß Beispiel 20 ein, so erhält man ebenfalls ein Pigment, das gegenüber dem entsprechenden Vergleichspigment eine Volltonlackierung mit deutlich verbessertem Glanz zeigt.

Verwendungsbeispiel XI:

Mit der nach Beispiel 26 erhaltenen Additionsverbindung wurde eine Pigmentpaste hergestellt. Hierzu wurden 60 g C.I.1 Pigment Yellow, 42,6 g Produktlösung, 54,6 g NMP und 120 g Glasperlen zusammengegeben und anschließend unter Verwendung einer Polypropylenscheibe von 40 mm Durchmesser 30 Min. bei 40° C dispergiert. Nach dem Abfiltrieren der Glasperlen wurde eine fließfähige Pigmentpaste mit ausgezeichneten rheologischen Eigenschaften erhalten. Durch Zugabe von 5 % dieser Pigmentpaste zu einem Alkyd-Melamin-Weißlack (22% $TiO_2$, 46,6 % fettsäuremodifiziertes mittelöliges Alkydharz, 24,3 % Melaminharz) wurde ein hochglänzender Lackfilm mit einwandfreier Oberfläche erhalten.

Die mit der Vergleichsverbindung (Beispiel 16 von EP-A-0 154 678) hergestellte Paste war dagegen nicht fließfähig und zeigte eine deutliche Thixotropie und der damit erhaltene Lackfilm war deutlich matter und voll von Pigmentstippen.

## Patentansprüche

**1.** Dispergiermittel und als Disperionsstabilisatoren geeignete Additionsverbindungen und deren Salze, erhältlich durch Umsetzung von Polyisocyanaten, Hydroxyverbindungen und weiteren Zerewitinoff-Wasserstoff sowie mindestens eine saure funktionelle Gruppierung oder Alkoxysilyl-Gruppe enthaltenden Verbindungen, gegebenenfalls in Anwesenheit von Lösungsmitteln und gegebenenfalls in Gegenwart von Umsetzungskatalysatoren,
**dadurch gekennzeichnet**,
daß sie dadurch erhältlich sind, daß Polyisocyanate mit einer mittleren Funktionalität von 2,5 bis 10
a) mit Monohydoxyverbindungen der Fomel I

Y-OH I

wobei Y die folgenden Bedeutungen hat:
i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,
ii) mindestens eine -O-, -NHCOO- und/oder -COO-Gruppe enthaltende aliphatische, cycloaliphatische und/oder aromatische Gruppe mit mittleren Molekulargewichten $\overline{M}_n$ von 200 bis 10000, wobei die Wasserstoffatome teilweise durch Halogene ersetzt sein können,
in einer solchen Menge umgesetzt werden, daß 10 bis 70 % der NCO-Gruppen umgesetzt sind,
b) mit Verbindungen der Formel

G-(E)n II

wobei G-(E)n Diole, Triole, Diamine, Dihydroxydialkylsulfide oder Dihydroxysulfone darstellt, n für 2 oder 3 steht, und G eine mindestens 2 Kohlenstoffatome enthaltende aliphatische, cycloatliphatische und/oder aromatische Gruppe mit mittlerem Molekulargewicht $\overline{M}_n$ von höchstens 3000 darstellt, die -O-, -COO-, CONH-, -NHCOO-, -S-, $-Si(CH_3)_2O-$ und/oder $-SO_2$-Gruppen enthalten kann, in einer solchen Menge umgesetzt wird, daß 1 bis 50 % der NCO-Gruppen der ursprünglich eingesetzten Polyisocyanate umgesetzt sind, wobei jedoch durch die Umsetzungen a) und b) insgesamt mindestens 20 % und maximal 85 % der NCO-Gruppen der ursprünglich eingesetzten Polyisocyanate umgesetzt sind,
c) mit mindestens einer der Verbindungen der allgemeinen

Formel III Z-Q III

oder

IV Z-NH-Z IV

worin Q für -OH, $-NH_2$, -NHR (worin R für eine Alkylgruppe mit 1 bis 4 Kohlenstoffatomen steht) oder -SH steht und jedes Z, die gleich oder verchieden sind, einen aliphatischen und/oder cycloaliphatischen und/oder aromatischen Rest mit mindestens einer sauren funktionellen Gruppierung und/oder mit mindestens einer $Si(OR)_m(R')_{3-m}$-Gruppe (worin R und R' Alkylgruppen mit 1 bis 10 Kohlenstoffatomen darstellen und m = 1-3) darstellt oder Z-Q Mono- oder Polyhydroxyverbindungen darstellt, die eine primäre Aminogruppe enthalten, in einer solchen Menge umgesetzt wird, daß auf jede verbleibende in den Reaktionen a) und b) noch nicht umgesetzte Isocyanatgruppe mindestens 0.8 Moleküle der Verbindung Z-Q und/oder Z-NH-Z entfallen, und
d) wenn das erhaltene Reaktionsprodukt nicht umgesetzte Hydroxyl-Gruppen enthält, diese Hydroxyl-Gruppen mit Polycarbonsäuren mit mindestens 2 Carboxylgruppen oder deren Anhydriden in einer solchen Menge umgesetzt werden, daß auf jede umzusetzende OH-Gruppe mindestens 0,8 Moleküle Polycarbonsäure oder Polycarbonsäureanhydrid eingesetzt wird.

2. Additionsverbindungen und deren Salze nach Anspruch 1, dadurch gekennzeichnet, daß bei der Umsetzung a) 15 bis 45 % der NCO-Gruppen umgesetzt sind und/oder bei der Umsetzung b) 5 bis 45 % der NCO-Gruppen der ursprünglich eingesetzten Polyisocyanate umgesetzt sind und/oder durch die Umsetzungen a) und b) insgesamt 30 bis 65 % der NCO-Gruppen der ursprünglich eingesetzten Polyisocyanate umgesetzt sind und/oder bei der Umsetzung d) auf jede umzusetzende OH-Gruppe ein Molekül Polycarbonsäure oder Polycarbonsäureanhydrid eingesetzt wird.

3. Additionsverbindungen und deren Salze nach Anspruch 1 oder 2, dadurch gekennzeichnet, daß bei der Umsetzung a) 20 bis 40 % der NCO-Gruppen umgesetzt sind und/oder bei der Umsetzung b) 15 bis 40 % der NCO-Gruppen der ursprünglich eingesetzten Polyisocyanate umgesetzt sind und/oder durch die Umsetzungen a) und b) insgesamt 40 bis 60 % der NCO-Gruppen der ursprünglich eingesetzen Polyisocyanate umgesetzt sind.

4. Additionsverbindungen und deren Salze nach Anspruch 1 bis 3, dadurch gekennzeichnet, daß in der Verbindung der Formel I Y die folgenden Bedeutungen hat:
mindestens eine -O- und/oder -COO-Gruppe enthaltende aliphatische, cycloaliphatische und/oder aromatische Gruppen mit mittleren Molekulargewichten $\overline{M}_n$ von 200 bis 10000, wobei die Wasserstoffatome teilweise durch Halogene ersetzt sein können.

5. Additionsverbindungen und deren Salze nach einem oder mehreren der Ansprüche 1 bis 4, dadurch gekennzeichnet, daß die Monohydroxyverbindungen der Formel I Polyester mit mittleren Molekulargewichten $\overline{M}_n$ von 500 bis 5000 vorzugsweise aus aliphatischen Lactonen und aliphatischen Monoalkoholen mit 4 bis 18 Kohlenstoffatomen sind.

6. Additionsverbindungen und deren Salze nach einem oder mehreren der Ansprüche 1 bis 4, dadurch gekennzeichnet, daß die Monohydroxyverbindungen der Formel I Polyoxyalkylenglykolmonoalkylether mit mittleren Molekulargewichten $\overline{M}_n$ von 200 bis 3000 sind.

7. Additionsverbindungen und deren Salze nach einem oder mehreren der Ansprüche 1 bis 6, dadurch gekennzeichnet, daß die Verbindungen der Formel II Polyoxyalkylenglykole, vorzugsweise mit mittleren Molekulargewichten $\overline{M}_n$ von 400 bis 2000 sind.

8. Additionsverbindungen und deren Salze nach einem oder mehreren der Ansprüche 1 bis 6, dadurch gekennzeichnet, daß die Verbindungen der Formel II Hydroxypolyester mit 2 bis 3 OH-Gruppen und mittleren Molekulargewichten $\overline{M}_n$ von 500 bis 3000 sind.

9. Additionsverbindungen und deren Salze nach einem oder mehreren der Ansprüche 1 bis 8, dadurch gekennzeichnet, daß in den Formeln III und IV die Gruppe Z mindestens eine $HO_2C$- oder $HO_3S$-Gruppe trägt.

10. Additionsverbindungen und deren Salze nach einem oder mehreren der Ansprüche 1 bis 8, dadurch gekennzeichnet, daß in der Formel IV Z-NH-Z ein sekundäres Amin mit mindestens einer OH-Gruppe ist.

11. Verfahren zur Herstellung von als Dispergiermittel und als Dispersionsstabilisatoren geeigneten Additionsverbindungen und deren Salzen, durch Umsetzung von Polyisocyanaten, Hydroxyverbindungen und weiteren Zerewitinoff-Wasserstoff sowie mindestens eine saure funktionelle Gruppierung oder Alkoxysilyl-Gruppe enthaltenden Verbindungen, gegebenenfalls in Anwesenheit von Lösungsmitteln und gegebenenfalls in Gegenwart von Umsetzungskatalysatoren,
**dadurch gekennzeichnet**,
daß Polyisocyanate mit einer mittleren Funktionalität von 2,5 bis 10
a) mit Monohydroxyverbindungen der Formel I

Y-OH I

wobei Y die folgenden Bedeutungen hat:
i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,

ii) mindestens eine -O-, -NHCOO- und/oder -COO-Gruppe enthaltende aliphatische, cycloaliphatische und/oder aromatische Gruppe mit mittleren Molekulargewichten $\overline{M}_n$ von 200 bis 10000, wobei die Wasserstoffatome teilweise durch Halogene ersetzt sein können,

in einer solchen Menge umgesetzt werden, daß 10 bis 70 % der NCO-Gruppen umgesetzt sind,

b) mit Verbindungen der Formel

G-(E)n II

wobei G-(E)n Diole, Triole, Diamine, Dihydroxydialkylsulfide oder Dihydroxysulfone darstellt, und n für 2 oder 3 steht, und G eine mindestens 2 Kohlenstoffatome enthaltende aliphatische cycloaliphatische und/oder aromatische Gruppe mit mittlerem Molekulargewicht $\overline{M}_n$ von höchstens 3000 darstellt, die -O-, -COO-, CONH-, -NHCOO-, -S-, $-Si(CH_3)_2O-$ und/oder $-SO_2$-Gruppen enthalten kann, in einer solchen Menge umgesetzt wird, daß 1 bis 50 % der NCO-Gruppen der ursprünglich eingesetzten Polyisocyanate umgesetzt sind, wobei jedoch durch die Umsetzungen a) und b) insgesamt mindestens 20 % und maximal 85 % der NCO-Gruppen der ursprünglich eingesetzten Polyisocyanate umgesetzt sind,

c) mit mindestens einer der Verbindungen der allgemeinen

Formel III Z-Q III

oder

IV Z-NH-Z IV

worin Q für -OH, $-NH_2$, -NHR (worin R für eine Alkylgruppe mit 1 bis 4 Kohlenstoffatomen steht) oder -SH steht und jedes Z, die gleich oder verschieden sind, einen aliphatischen und/oder cycloaliphatischen und/oder aromatischen Rest mit mindestens einer sauren funktionellen Gruppierung und/oder mit mindestens einer $Si(OR)_m(R')_{3-m}$-Gruppe (worin R und R' Alkylgruppen mit 1 bis 10 Kohlenstoffatomen darstellen und m = 1-3) darstellt, oder Z-Q Mono- oder Polyhydroxyverbindungen darstellt, die eine primäre Aminogruppe enthalten, in einer solchen Menge umgesetzt wird, daß auf jede verbleibende in den Reaktionen a) und b) noch nicht umgesetzte Isocyanatgruppe mindestens 0.8 Moleküle der Verbindung Z-Q und/oder Z-NH-Z entfallen, und

d) wenn das erhaltene Reaktionsprodukt nicht umgesetzt Hydroxyl-Gruppen enthält, diese Hydroxyl-Gruppen mit Polycarbonsäuren mit mindestens 2 Carboxylgruppen oder deren Anhydriden in einer solchen Menge umgesetzt werden, daß auf jede umzusetzende OH-Gruppe mindestens 0,8 Moleküle Polycarbonsäure oder Polycarbonsäurehydrid eingesetzt wird.

**12.** Verfahren nach Anspruch 11, dadurch gekennzeichnet, daß bei der Umsetzung a) 15 bis 45 % der NCO-Gruppen umgesetzt werden und/oder bei der Umsetzung b) 5 bis 45 % der NCO-Gruppen der ursprünglich eingesetzen Polyisocyanate umgesetzt werden und/oder durch die Umsetzungen a) und b) insgesamt 30 bis 65 % der NCO-Gruppen der ursprünglich eingesetzen Polyisocyanate umgesetzt werden und/oder bei der Umsetzung d) auf jede umzusetzende OH-Gruppe ein Molekül Polycarbonsäure oder Polycarbonsäureanhydrid eingesetzt wird.

**13.** Verfahren nach Anspruch 11 oder 12, dadurch gekennzeichnet, daß bei der Umsetzung a) 20 bis 40 % der NCO-Gruppen umgesetzt werden und/oder bei der Umsetzung b) 15 bis 40 % der NCO-Gruppen der ursprünglich eingesetzten Polyisocyanate umgesetzt werden und/oder durch die Umsetzungen a) und b) insgesamt 40 bis 60 % der NCO-Gruppen der ursprünglich eingesetzten Polyisocyanate umgesetzt werden.

**14.** Verfahren nach Anspruch 11 bis 13, dadurch gekennzeichnet, daß in der Verbindung der Formel I Y die folgenden Bedeutungen hat:
mindestens eine -O- und/oder COO-Gruppe enthaltende aliphatische, cycloaliphatische und/oder aromatische Gruppen mit mittleren Molekurlargewichten $\overline{M}_n$ von 200 bis 10000, wobei die Wasserstoffatome teilweise durch Halogene ersetzt sein können.

**15.** Verfahren nach einem oder mehreren der Ansprüche 11 bis 14, dadurch gekennzeichnet, daß die Monohydroxyverbindungen der Formel I Polyester mit mittleren Molekulargewichten $\overline{M}_n$ von 500 bis

5000, vorzugsweise aus aliphatischen Lactonen und aliphatischen Monoalkoholen mit 4 bis 18 Kohlenstoffatomen sind.

**16.** Verfahren nach einem oder mehreren der Ansprüche 11 bis 14, dadurch gekennzeichnet, daß die Monohydroxyverbindungen der Formel I Polyoxyalkylenglykolmonoalkylether mit mittleren Molekulargwichten $\overline{M}_n$ von 200 bis 3000 sind.

**17.** Verfahren nach einem oderen mehreren der Ansprüche 11 bis 16, dadurch gekennzeichnet, daß die Verbindungen der Formel II Polyoxylalkylenglykole, vorzugsweise mit mittleren Molekulargewichten $\overline{M}_n$ von 400 bis 2000 sind.

**18.** Verfahren nach einem oder mehreren Ansprüchen 11 bis 16, dadurch gekennzeichnet, daß die Verbindungen der Formel II Hydroxypolyester mit 2 bis 3 OH-Gruppen und mittleren Molekulargewichten $\overline{M}_n$ von 500 bis 3000 sind.

**19.** Verfahren nach einem oder mehreren der Ansprüche 11 bis 18, dadurch gekennzeichnet, daß in den Formeln III und IV die Gruppe Z mindestens eine $HO_2C$- oder $HO_3S$-Gruppe trägt.

**20.** Verfahren nach einem oder mehreren der Ansprüche 11 bis 18, dadurch gekennzeichnet, daß in der Formel IV Z-NH-Z ein sekundäres Amin mit mindestens einer OH-Gruppe ist.

**21.** Verwendung der Additionsverbindungen und deren Salze gemäß Ansprüchen 1 bis 20 als Dispergiermittel und als Dispersionsstabilisatoren.

**22.** In flüssige Systeme einzuarbeitende pulver- oder faserförmige Feststoffe, die mit Dispergiermittel beschichtet sind, dadurch gekennzeichnet, daß sie mit Additionsverbindungen oder deren Salzen gemäß Ansprüchen 1 bis 20 beschichtet sind.

**Claims**

**1.** Addition compounds and salts thereof suitable as dispersants and dispersion stabilizers which compounds are obtainable by reacting polyisocyanates, hydroxy compounds and additional compounds containing Zerewitinoff-hydrogen as well as at least one acidic functional group or alkoxysilyl group, optionally in the presence of solvents and optionally in the presence of reaction catalysts **characterized** in that said compounds are obtainable by reacting polyisocyanates having an average functionality of from 2,5 to 10

a) with monohydroxy compounds of the formula (I)

Y-OH (I)

wherein Y represents:

i) aliphatic and/or cycloaliphatic hydrocarbon groups having 8 to 30 carbon atoms, the hydrogen atoms of which in part can be substituted by halogens and/or aryl radicals,

ii) at least one -O-, -NHCOO- and/or -COO- group-containing aliphatic, cycloaliphatic and/or aromatic group having average molecular weights $\overline{M}_n$ of from 200 to 10 000, wherein the hydrogen atoms in part can be substituted by halogens,

in such an amount that 10 to 70 % of the NCO groups are reacted,

b) with compounds of the formula (II)

$G-(E)_n$ (II)

wherein $G-(E)_n$ represents diols, triols, diamines, dihydroxy dialkylsulfides or dihydroxysulfones, n represents 2 or 3 and G represents an aliphatic, cycloaliphatic and/or aromatic group having an average molecular weight $\overline{M}_n$ of at most 3000 and containing at least 2 carbon atoms which can contain -O-, -COO-, CONH-, -NHCOO-, -S-, $-Si(CH_3)_2O$- and/or $-SO_2$- groups,

in such an amount that 1 to 50 % of the NCO groups of the initially charged polyisocyanates are reacted wherein, however, by the reactions (a) and (b) in total at least 20 % and at most 85 % of the NCO groups of the initially charged polyisocyanates are reacted,

c) with at least one of the compounds of the general formula

Z-Q (III)

or

Z-NH-Z (IV)

wherein Q represents -OH, $-NH_2$, -NHR (wherein R is an alkyl group having 1 to 4 carbon atoms) or -SH and each Z which can be identical or different, represents an aliphatic and/or cycloaliphatic and/or aromatic radical having at least one acidic functional group and/or at least one $Si(OR)_m(R')_{3-m}$ group (wherein R and R' are alkyl groups having 1 to 10 carbon atoms and m is 1 to 3) or wherein Z-Q represents mono- or polyhydroxy compounds containing a primary amino group,
in such an amount that at least 0.8 molecule of the compound Z-Q and/or Z-NH-Z are used for each non-reacted isocyanate group remaining in reactions (a) and (b), and
d) wherein said hydroxyl groups are reacted with polycarboxylic acids having at least 2 carboxylic groups or anhydrides thereof, if the obtained reaction product contains non-reacted hydroxyl groups, in such an amount that at least 0,8 molecule of polycarboxylic acid or polycarboxylic anhydride is used for each OH group to be reacted.

**2.** The addition compounds and salts thereof according to claim 1, characterized in that in reaction (a) 15 to 45 % of the NCO groups are reacted and/or in reaction (b) 5 to 45 % of the NCO groups of the initially charged polyisocyanates are reacted and/or in reactions (a) and (b) a total of 30 to 65 % of the NCO groups of the initially charged polyisocyanates are reacted and/or in reaction (d) one molecule of the polycarboxylic acid or polycarboxylic anhydride is used for each OH group to be reacted.

**3.** The addition compounds and salts thereof according to claims 1 or 2, characterized in that in reaction (a) 20 to 40 % of the NCO groups are reacted and/or in reaction (b) 15 to 40 % of the NCO groups of the initially charged polyisocyanates are reacted and/or in reactions (a) and (b) a total of 40 to 60 % of the NCO groups of the initially charged polyisocyanates are reacted.

**4.** The addition compounds and salts thereof according to claims 1 to 3, characterized in that in the compound of formula (I) Y represents at least one -O- and/or -COO-group-containing aliphatic, cycloaliphatic and/or aromatic groups having average molecular weights $\overline{M}_n$ of from 200 to 10 000 wherein the hydrogen atoms in part can be substituted by halogens.

**5.** The addition compounds and salts thereof according to at least one of claims 1 to 4, characterized in that the monohydroxy compounds of formula (I) are polyesters having average molecular weights $M_n$ of from 500 to 5000, preferably derived from aliphatic lactones and aliphatic monoalcohols having 4 to 18 carbon atoms.

**6.** The addition compounds and salts thereof according to at least one of claims 1 to 4, characterized in that the monohydroxy compounds of formula (I) are polyoxyalkylene glycolmonoalkyl ethers having average molecular weights $\overline{M}_n$ of from 200 to 3000.

**7.** The addition compounds and salts thereof according to at least one of claims 1 to 6, characterized in that the compounds of formula (II) are polyoxyalkylene glycols, preferably those having average molecular weights $\overline{M}_n$ of from 400 to 2000.

**8.** The addition compounds and salts thereof according to at least one of claims 1 to 6, characterized in that the compounds of formula (II) are hydroxy polyesters having 2 to 3 OH groups and having average molecular weights $\overline{M}_n$ of from 500 to 3000.

**9.** The addition compounds and salts thereof according to at least one of claims 1 to 8, characterized in that in formulae (III) and (IV) the group Z contains at least one $HO_2C$ oder $HO_3S$ group.

**10.** The addition compounds and salts thereof according to at least one of claims 1 to 8, characterized in that in formula (IV) Z-NH-Z represents a secondary amine having at least one OH group.

**11.** A process for preparing addition compounds and salts thereof suitable as dispersants and dispersion stabilizers by reacting polyisocyanates, hydroxy compounds and additional compounds containing Zerewitinoff-hydrogen as well as at least one acidic functional group or alkoxysilyl group, optionally in the presence of solvents and optionally in the presence of reaction catalysts,
**characterized** in that
polyisocyanates having an average functionality of from 2,5 to 10 are reacted
a) with monohydroxy compounds of the formula (I)

Y-OH (I)

wherein Y represents:
i) aliphatic and/or cycloaliphatic hydrocarbon groups having 8 to 30 carbon atoms, the hydrogen atoms of which in part can be substituted by halogens and/or aryl radicals,
ii) at least one -O-, -NHCOO- and/or -COO- group-containing aliphatic, cycloaliphatic and/or aromatic group having average molecular weights $\overline{M}_n$ of from 200 to 10 000, wherein the hydrogen atoms in part can be substituted by halogens,
in such an amount that 10 to 70 % of the NCO groups are reacted,
b) with compounds of the formula (II)

$G-(E)_n$ (II)

wherein $G-(E)_n$ represents diols, triols, diamines, dihydroxy dialkylsulfides or dihydroxysulfones, n represents 2 or 3 and G represents an aliphatic, cycloaliphatic and/or aromatic group having an average molecular weight $M_n$ of at most 3000 and containing at least 2 carbon atoms which can contain -O-, -COO-, CONH-, -NHCOO-, -S-, $-Si(CH_3)_2O-$ and/or $-SO_2-$ groups,
in such an amount that 1 to 50 % of the NCO groups of the initially charged polyisocyanates are reacted wherein, however, by the reactions (a) and (b) in total at least 20 % and at most 85 % of the NCO groups of the initially charged polyisocyanates are reacted,
c) with at least one of the compounds of the general formula

Z-Q (III)

or

Z-NH-Z (IV)

wherein Q represents -OH, $-NH_2$, -NHR (wherein R is an alkyl group having 1 to 4 carbon atoms) or -SH and each Z which can be identical or different, represents an aliphatic and/or cycloaliphatic and/or aromatic radical having at least one acidic functional group and/or at least one $Si(OR)_m(R')_{3-m}$ group (wherein R and R' are alkyl groups having 1 to 10 carbon atoms and m is 1 to 3) or wherein Z-Q represents mono- or polyhydroxy compounds containing a primary amino group,
in such an amount that at least 0,8 molecule of the compound Z-Q and/or Z-NH-Z are used for each non-reacted isocyanate group remaining in reactions (a) and (b), and
d) wherein said hydroxyl groups are reacted with polycarboxylic acids having at least 2 carboxylic groups or anhydrides thereof, if the obtained reaction product contains non-reacted hydroxyl groups, in such an amount that at least 0,8 molecule of polycarboxylic acid or polycarboxylic anhydride is used for each OH group to be reacted.

**12.** The process according to claim 11, characterized in characterized in that in reaction (a) 15 to 45 % of the NCO groups are reacted and/or in reaction (b) 5 to 45 % of the NCO groups of the initially charged polyisocyanates are reacted and/or in reactions (a) and (b) a total of 30 to 65 % of the NCO groups of the initially charged polyisocyanates are reacted and/or in reaction (d) one molecule of the polycarboxylic acid or polycarboxylic anhydride is used for each OH group to be reacted.

**13.** The process according to claim 11 or 12, characterized in that in reaction (a) 20 to 40 % of the NCO groups are reacted and/or in reaction (b) 15 to 40 % of the NCO groups of the initially charged polyisocyanates are reacted and/or in reactions (a) and (b) a total of 40 to 60 % of the NCO groups of the initially charged polyisocyanates are reacted.

**14.** The process according to claims 1 to 13, characterized in that in the compound of formula (I) Y represents at least one -O- and/or -COO- group-containing aliphatic, cycloaliphatic and/or aromatic groups having average molecular weights $\overline{M}_n$ of from 200 to 10 000 wherein the hydrogen atoms in part can be substituted by halogens.

**15.** The process according to at least one of claims 11 to 14, characterized in that the monohydroxy compounds of formula (I) are polyesters having average molecular weights $\overline{M}_n$ of from 500 to 5000, preferably derived from aliphatic lactones and aliphatic monoalcohols having 4 to 18 carbon atoms.

**16.** The process according to at least one of claims 11 to 14, characterized in that the monohydroxy compounds of formula (I) are polyoxyalkylene glycolmonoalkyl ethers having average molecular weights $\overline{M}_n$ of from 200 to 3000.

**17.** The process according to at least one of claims 11 to 16, characterized in that the compounds of formula (II) are polyoxyalkylene glycols, preferably those having average molecular weights $\overline{M}_n$ of from 400 to 2000.

**18.** The process according to at least one of claims 11 to 16, characterized in that the compounds of formula (II) are hydroxy polyesters having 2 to 3 OH groups and having average molecular weights $\overline{M}_n$ of from 500 to 3000.

**19.** The process according to at least one of claims 11 to 18, characterized in that in formulae (III) and (IV) the group Z contains at least one $HO_2C$ oder $HO_3S$ group.

**20.** The process according to at least one of claims 11 to 18, characterized in that in formula (IV) Z-NH-Z represents a secondary amine having at least one OH group.

**21.** The use of the addition compounds and salts thereof according to claims 1 to 20 as dispersants and dispersion stabilizers.

**22.** Powdery or fibrous solids to be incorporated into liquid systems and being coated with a dispersant, characterized in that they are coated with the addition compounds or salts thereof according to claims 1 to 20.

## Revendications

**1.** Composés d'addition et leurs sels, convenant à l'utilisation en tant qu'agents dispersants et stabilisants de dispersion, obtenus par réaction de polyisocyanates, de composés hydroxylés et d'autres composés à hydrogène de Zerewitinoff et au moins un groupement fonctionnel acide ou un groupe alcoxysilyle, éventuellement en présence de solvants et éventuellement en présence de catalyseurs de réaction, caractérisés en ce qu'ils sont obtenus par réaction de polyisocyanates ayant une fonctionnalité moyenne de 2,5 à 10

a) avec des composés monohydroxylés de formule I

Y-OH    I

dans laquelle Y a les significations suivantes :

i) groupes hydrocarbonés aliphatiques et/ou cycloaliphatiques en C 8-C 30 dont les atomes d'hydrogène peuvent être remplacés en partie par des halogènes et/ou des groupes aryle,

ii) groupes aliphatiques, cycloaliphatiques et/ou aromatiques contenant au moins un pont -O-, -NHCOO- et/ou -COO-, de poids moléculaire moyen $\overline{M}_n$ 200 à 10 000 et dont les atomes d'hydrogène peuvent être remplacés en partie par des halogènes,

en quantité telle que 10 à 70 % des groupes NCO soient convertis,

b) avec des composés de formule

G-(E)n    II

dans laquelle G-(E)n représente des diols, des triols, des diamines, des sulfures de dihydroxydialkyle ou des dihydroxysulfones, n est égal à 2 ou 3 et G représente un groupe aliphatique, cycloaliphatique et/ou aromatique contenant au moins 2 atomes de carbone, d'un poids moléculaire moyen $\overline{M}_n$ 3000 au maximum et qui peut contenir des groupes -O-, -COO-, -CONH-, -S-, $-Si(CH_3)_2O-$, -NHCOO- et/ou $-SO_2-$, en quantité telle que 1 à 50 % des groupes NCO des polyisocyanates mis en oeuvre à l'origine soient convertis, étant toutefois spécifié qu'au total au moins 20 % et au maximum 85 % des groupes NCO des polyisocyanates mis en oeuvre à l'origine sont convertis dans les réactions a) et b),

c) avec au moins un des composés de formule générale III ou IV

Z-Q III

Z-NH-Z IV

dans lesquelles Q représente -OH, $-NH_2$, -NHR (dans lequel R représente un groupe alkyle en C 1-C 4) ou -SH, et les symboles Z, qui peuvent avoir des significations identiques ou différentes, représentent chacun un radical aliphatique et/ou cycloaliphatique et/ou aromatique à au moins un groupement fonctionnel acide et/ou à au moins un groupe $Si(OR)_m(R')_{3-m}$ (dans lequel R et R' représentent des groupes alkyle en C 1-C 10 et m = 1 à 3), ou bien Z-Q représente des composés mono- ou poly-hydroxylés contenant un groupe amino primaire, en quantité telle que, pour chaque groupe isocyanate encore non converti dans les réactions a) et b), on dispose d'au moins 0,8 molécule du composé Z-Q et/ou Z-NH-Z, et

d) Lorsque le produit de réaction obtenu contient des groupes hydroxy non convertis, on fait réagir ces groupes hydroxy avec des acides polycarboxyliques à au moins deux groupes carboxyle ou leurs anhydrides en quantité telle que l'on dispose d'au moins 0,8 molécule d'acide polycarboxylique ou d'anhydride d'acide polycarboxylique pour chaque groupe OH à convertir.

**2.** Composés d'addition et leurs sels selon revendication 1, caractérisés en ce que, dans la réaction a), de 15 à 45 % des groupes NCO sont convertis, et/ou, dans la réaction b), de 5 à 45 % des groupes NCO des polyisocyanates mis en oeuvre à l'origine sont convertis et/ou, dans les réactions a) et b), au total de 30 à 65 % des groupes NCO des polyisocyanates mis en oeuvre à l'origine sont convertis, et/ou, dans la réaction d), on met en oeuvre une molécule d'acide polycarboxylique ou d'anhydride d'acide polycarboxylique pour chaque groupe OH à convertir.

**3.** Composés d'addition et leurs sels selon revendication 1 ou 2, caractérisés en ce que, dans la réaction a), 20 à 40 % des groupes NCO sont convertis et/ou, dans la réaction b), 15 à 40 % des groupes NCO des polyisocyanates mis en oeuvre à l'origine sont convertis et/ou, dans les réactions a) et b), au total de 40 à 60 % des groupes NCO des polyisocyanates mis en oeuvre à l'origine sont convertis.

**4.** Composés d'addition et leurs sels selon une des revendications 1 à 3, caractérisés en ce que, dans le composé de formule I, Y a les significations suivantes : groupes aliphatiques, cycloaliphatiques et/ou aromatiques contenant au moins un groupe -O- et/ou -COO-, avec un poids moléculaire moyen $\overline{M}_n$ de 200 à 10 000, les atomes d'hydrogène pouvant être remplacés en partie par des halogènes.

**5.** Composés d'addition et leurs sels selon une ou plusieurs des revendications 1 à 4, caractérisés en ce que les composés monohydroxylés de formule I sont des polyesters de poids moléculaire moyen $\overline{M}_n$ de 500 à 5000, de préférence de lactones aliphatiques et de monoalcools aliphatiques en C 4-C 18.

**6.** Composés d'addition et leurs sels selon une ou plusieurs des revendications 1 à 4, caractérisés en ce que les composés monohydroxylés de formule I sont des éthers monoalkyliques de polyoxyalkylèneglycols de poids moléculaire moyen $\overline{M}_n$ 200 à 3000.

**7.** Composés d'addition et leurs sels selon une ou plusieurs des revendications 1 à 6, caractérisés en ce que les composés de formule II sont des polyoxyalkylèneglycols de préférence à des poids moléculaires moyens $\overline{M}_n$ 400 à 2000.

**8.** Composés d'addition et leurs sels selon une ou plusieurs des revendications 1 à 6, caractérisés en ce que les composés de formule II sont des hydroxypolyesters à 2 ou 3 groupes OH et à des poids moléculaires moyens $\overline{M}_n$ 500 à 3000.

**9.** Composés d'addition et leurs sels selon une ou plusieurs des revendications 1 à 8, caractérisés en ce que, dans les formules III et IV, le groupe Z porte au moins un groupe $HO_2C$- ou $HO_3S$-.

**10.** Composés d'addition et leurs sels selon une ou plusieurs des revendications 1 à 8, caractérisés en ce que, dans la formule IV, Z-NH-Z représente une amine secondaire à au moins un groupe OH.

**11.** Procédé de préparation de composés d'addition et leurs sels convenant à l'utilisation en tant qu'agents dispersants et/ou stabilisants de dispersions par réaction de polyisocyanates, de composés hydroxylés et d'autres composés contenant de l'hydrogène de Zerewitinoff et au moins un groupement fonctionnel acide ou un groupe alcoxysilyle, éventuellement en présence de solvants et éventuellement en présence de catalyseurs de réaction,
caractérisé en ce que l'on fait réagir des polyisocyanates de fonctionnalité moyenne 2,5 à 10
a) avec des composés monohydroxylés de formule I

Y-OH I

dans laquelle Y a les significations suivantes :
i) groupes hydrocarbonés aliphatiques et/ou cycloaliphatiques en C 8-C 30 dont les atomes d'hydrogène peuvent être remplacés en partie par des halogènes et/ou des groupes aryle,
ii) groupe aliphatique, cycloaliphatique et/ou aromatique contenant au moins un groupe -O-, -NHCOO- et/ou -COO-, à un poids moléculaire moyen $\overline{M}_n$ 200 à 10 000, dans lequel les atomes d'hydrogène peuvent être remplacés en partie par des halogènes,
en quantité telle que 10 à 70 % des groupes NCO soient convertis,
b) avec des composés de formule

G-(E)n III

dans laquelle G-(E)n représente des diols, des triols, des diamines, des sulfures de dihydroxydialkyle ou des dihydroxysulfones et n est égal à 2 ou 3, et G représente un groupe aliphatique, cycloaliphatique et/ou aromatique contenant au moins 2 atomes de carbone, à un poids moléculaire moyen $\overline{M}_n$ de 3000 au maximum et qui peut contenir des groupes -O-, -COO-, -CONH-, -NHCOO-, -S-, $-Si(CH_3)_2O-$ et/ou $-SO_2-$, en quantité telle que 1 à 50 % des groupes NCO des polyisocyanates mis en oeuvre à l'origine soient convertis, étant spécifié toutefois que dans les réactions a) et b) au total au moins 20 % et au maximum 85 % des groupes NCO des polyisocyanates mis en oeuvre à l'origine soient convertis,
c) avec au moins un des composés de formules générales III ou IV

Z-Q III

Z-NH-Z IV

dans lesquelles Q représente -OH, $-NH_2$, -NHR (dans lequel R représente un groupe alkyle en C 1-C 4) ou -SH, et les symboles Z, qui peuvent avoir des significations identiques ou différentes, représentant chacun un radical aliphatique et/ou cycloaliphatique et/ou aromatique à au moins un groupement fonctionnel acide et/ou à au moins un groupe $Si(OR)_m(R')_{3-m}$ (dans lequel R et R' représentent des groupes alkyle en C 1-C 10 et m = 1 à 3), ou bien Z-Q représente des composés mono- ou poly-hydroxylés contenant un groupe amino primaire, en quantité telle que, pour chaque groupe isocyanate encore non converti dans les réactions a) et b), on dispose d'au moins 0,8 molécule du composé Z-Q et/ou Z-NH-Z, et
d) lorsque le produit de réaction obtenu contient des groupes hydroxy non convertis, on fait réagir ces groupes hydroxy avec des acides polycarboxyliques à au moins 2 groupes carboxyle ou leurs anhydrides en quantité telle que, pour chaque groupe OH à convertir, on dispose d'au moins 0,8 molécule d'acide polycarboxylique ou d'anhydride d'acide polycarboxylique.

**12.** Procédé selon revendication 11, caractérisé en ce que, dans la réaction a), on convertit 15 à 45 % des groupes NCO et/ou dans la réaction b), on convertit 5 à 45 % des groupes NCO des polyisocyanates mis en oeuvre à l'origine, et/ou, dans les réactions a) et b), on convertit au total 30 à 65 % des groupes NCO des polyisocyanates mis en oeuvre à l'origine et/ou dans la réaction d), pour chaque groupe OH

à convertir, on met en oeuvre 1 molécule d'acide polycarboxylique ou d'anhydride d'acide polycarboxylique.

**13.** Procédé selon revendication 11 ou 12, caractérisé en ce que, dans la réaction a), on convertit 20 à 40 % des groupes NCO et/ou dans la réaction b), on convertit 15 à 40 % des groupes NCO des polyisocyanates mis en oeuvre à l'origine, et/ou, dans les réactions a) et b) on convertit au total 40 à 60 % des groupes NCO des polyisocyanates mis en oeuvre à l'origine.

**14.** Procédé selon revendications 11 à 13, caractérisé en ce que, dans le composé de formule I, Y a les significations suivantes :
groupes aliphatiques, cycloaliphatiques et/ou aromatiques contenant au moins un groupe -O- et/ou -COO-, à un poids moléculaire moyen $\overline{M}_n$ de 200 à 10 000, dans lesquels les atomes d'hydrogène peuvent être remplacés en partie par des halogènes.

**15.** Procédé selon une ou plusieurs des revendications 11 à 14, caractérisé en ce que les composés monohydroxylés de formule I sont des polyesters de poids moléculaire moyen $\overline{M}_n$ 500 à 5000, de préférence de lactones aliphatiques et de monoalcools aliphatiques en C 4-C 18.

**16.** Procédé selon une ou plusieurs des revendications 11 à 14, caractérisé en ce que les composés monohydroxylés de formule I sont des éthers monoalkyliques de polyoxyalkylène-glycols de poids moléculaire moyen $\overline{M}_n$ 200 à 3000.

**17.** Procédé selon une ou plusieurs des revendications 11 à 16, caractérisé en ce que les composés de formule II sont des polyoxyalkylène-glycols, de préférence à des poids moléculaires moyens $\overline{M}_n$ 400 à 2000.

**18.** Procédé selon une ou plusieurs des revendications 11 à 16, caractérisé en ce que les composés de formule II sont des hydroxypolyesters contenant 2 à 3 groupes OH et ayant des Poids moléculaires moyens $\overline{M}_n$ de 500 à 3000.

**19.** Procédé selon une ou plusieurs des revendications 11 à 18, caractérisé en ce que, dans les formules III et IV, le groupe Z porte au moins un groupe $HO_2C$- ou $HO_3S$-.

**20.** Procédé selon une ou plusieurs des revendications 11 à 18, caractérisé en ce que, dans la formule IV, Z-NH-Z représente une amine secondaire à au moins un groupe OH.

**21.** Utilisation des composés d'addition et leurs sels selon revendications 1 à 20 en tant qu'agents dispersants et stabilisants de dispersions.

**22.** Substances solides pulvérulentes ou fibreuses à incorporer dans des systèmes liquides, qui sont revêtues par des agents dispersants, caractérisées en ce qu'elles sont revêtues de composés d'addition ou leurs sels selon revendications 1 à 20.